# EUROPÄISCHE PATENTSCHRIFT

(11) **EP 3 321 628 B1**
(45) Veröffentlichungstag und Bekanntmachung des Hinweises auf die Patenterteilung: **01.01.2020**
(21) Anmeldenummer: 16198080.0
(22) Anmeldetag: 10.11.2016
(51) Int. Cl.: G01B 11/24, G01B 11/00

(54) **KOORDINATEN-MESSVORRICHTUNG MIT OPTISCHEM SENSOR UND ENTSPRECHENDES VERFAHREN**
COORDINATE MEASURING DEVICE COMPRISING AN OPTICAL SENSOR, AND CORRESPONDING METHOD
DISPOSITIF DE MESURE DE COORDONNÉES DOTÉ D'UN CAPTEUR OPTIQUE ET PROCÉDÉ CORRESPONDANT

(43) Veröffentlichungstag der Anmeldung: 16.05.2018
(73) Patentinhaber: Klingelnberg AG, 8050 Zürich (CH)
(72) Erfinder: Mies, Georg, 51688 Wipperfürth (DE)
(74) Vertreter: Heusch, Christian

(56) Entgegenhaltungen:
- DE-A1- 3 934 744
- DE-A1- 4 142 676
- US-A1- 2007 291 260

## Beschreibung

Die Erfindung betrifft eine Koordinaten-Messvorrichtung mit optischem Sensor und ein entsprechendes Verfahren zum optischen Messen von Zahnrad-Bauteilen.

### HINTERGRUND DER ERFINDUNG

In vielen technischen Bereichen ist das exakte Vermessen eines Bauteils von grosser Bedeutung.

Es gibt z.B. verschiedene Messvorrichtungen zum taktilen Erfassen der Beschaffenheit und des Profils von Oberflächen. Typischerweise wird bei der mechanischen Abtastung eine Tastspitze über die zu vermessende Oberfläche geführt. Das Ergebnis ist ein über den Tastweg aufgezeichnetes Signal, das Aussagen über das Oberflächenprofil zulässt.

Es besteht der Bedarf derartige Messungen möglichst in-line im Rahmen eines Produktionsprozesses vorzunehmen, wobei die erwähnte mechanische Abtastung zwar sehr genau aber leider auch recht langsam ist. Zur Integration in einen Produktionsablauf eignet sich das mechanische Messen daher in den meisten Fällen nicht. Heute kommen mechanisch abtastende Messverfahren daher z.B. zum Einsatz, um einzelne Bauteile aus einer Serienproduktion exemplarisch zu prüfen, um dann bei Abweichungen korrigierend in den laufenden Produktionsprozess eingreifen zu können.

Auf den ersten Blick könnte das optische Messen eine Alternative zu dem mechanische Messen darstellen. Ideal wäre hier der Einsatz optisch messender Sensoren. Es hat sich jedoch gezeigt, dass sich die optisch messenden Sensoren aus verschiedenen Gründen für die Anforderungen an die Verzahnungsmessung nicht eignen. Die besonderen Anforderungen oder Kriterien, die bei einer Verzahnungsmessung gelten, sind:
- ungünstige Antastwinkel,
- glatte Oberflächen z.B. der Zahnflanken,
- Abschattung durch benachbarte Zähne, und
- hohe Anforderungen an die Messgenauigkeit (im Bereich von 0,1 - 0,3 Mikrometern).

Die bekannten interferometrischen Sensoren sind zwar sehr genau und haben eine sehr hohe Auflösung aber ihr Messbereich ist klein. Der Abstand dieses Sensortyps zur Oberfläche muss sehr klein sein und der Akzeptanzwinkel ist sehr eng. Ausserdem sind solche interferometrischen Sensoren sehr teuer.

Sensoren, die nach dem Prinzip eines Laser-Triangulationssensors arbeiten, sind schnell und haben einen grossen Akzeptanzwinkel. Leider sind jedoch die Laser-Triangulationssensoren für Verzahnungsmessungen nicht ausreichend genau, d.h. solche Sensoren wären nur mit deutlichen Einschränkungen nutzbar.

Chromatische Sensoren haben eine hohe Auflösung, machen aber eine grosse numerische Apertur notwendig, wenn man die oben genannten Bedingungen erfüllen möchte. Ausserdem haben chromatische Sensoren, die im Prinzip geeignet sein könnten, einen breiten Lichtkegel. Durch Abschattungen kann es zu einer deutlichen Reduktion des Akzeptanzwinkels kommen. Wenn man den chromatischen Sensor steiler anstellt (d.h. wenn ein steilerer Antastwinkel vorgegeben wird), dann können die Probleme mit Abschattungen zum Teil vermieden werden. Bei einem steilen Antastwinkel empfängt der Sensor jedoch kein brauchbares Signal.

Es besteht der Bedarf im Rahmen der Produktion von Zahnrad-Bauteilen schnelle Messungen vornehmen zu können, um idealerweise jedes einzelne Zahnrad-Bauteil während oder unmittelbar nach der Produktion prüfen zu können.

Es ist eine Aufgabe der Erfindung eine Vorrichtung und ein entsprechendes Verfahren bereit zu stellen, die es ermöglichen schnelle und präzise Messungen an Zahnrad-Bauteilen vorzunehmen.

Die Aufgabe wird durch eine Koordinaten-Messvorrichtung gemäß Anspruch 1 und durch ein Verfahren gemäß Anspruch 12 gelöst.

Eine erfindungsgemäße Koordinaten-Messvorrichtung umfasst mehrere Achsen, eine drehantreibbare Aufnahme für ein zu messendes Zahnrad-Bauteil und einen Messaufbau, wobei die Koordinaten-Messvorrichtung dazu ausgelegt ist relative Zustellbewegungen und Messbewegungen des Messaufbaus relativ zum Zahnrad-Bauteil auszuführen. Die erfindungsgemäße Koordinaten-Messvorrichtung zeichnet sich dadurch aus, dass der Messaufbau einen optischen, berührungslos arbeitenden Schaltsensor umfasst,
∘ der als Fokus-Trigger-Sensor ausgelegt ist, wobei der Fokus-Trigger-Sensor so am Messaufbau angeordnet ist, dass er in der Lage ist einen Lichtstrahl entlang einer optischen Achse in Richtung einer Objektebene des Zahnrad-Bauteils auszusenden,
∘ wobei mit dem Fokus-Trigger-Sensor unter Einsatz einer oder mehrerer der Achsen eine Zustellbewegung relativ zu der Objektebene des Zahnrad-Bauteils ausführbar ist, und
∘ wobei durch den Fokus-Trigger-Sensor ein Schaltsignal bereitstellbar ist, sobald der Fokus-Trigger-Sensor relativ zu der Objektebene einen Nennabstand erreicht hat.

Vorzugsweise ist mindestens eine der Achsen als NC-gesteuerte Achse ausgelegt.

Die Erfindung beruht auf dem Einsatz mindestens eines optischen Schaltsensors, der eine hochgenaue und schnelle Abstandermittlung ermöglicht, indem dieser Schaltsensor beim Erreichen des Nennabstands ein Schaltsignal ausgibt. Wenn der optische Schaltsensor, wie dies bei der vorliegenden Erfindung der Fall ist, in einer Koordinaten-Messvorrichtung mit hochgenauer mechanischer Positionierung der einzelnen Achsen (die zum Teil oder komplett NC-gesteuert sein können) zum Einsatz kommt, dann kann man mit dem optischen Schaltsensor genau den Nennabstand zu einer zu messenden Oberfläche, zu einer Linie oder einem Punkt anfahren. In dem Moment, in dem der optische Schaltsensor das Schaltsignal abgibt, können z.B. die momentanen Koordinateninformationen (Ist-Daten) der Koordinaten-Messvorrichtung ausgelesen und/oder (zwischen-)gespeichert werden. Aus den momentanen Koordinateninformationen kann unter Berücksichtigung des Nennabstandes genau die Lage des Fokus-Punktes auf der Oberfläche ermittelt werden.

Bevorzugt sind Ausführungsformen der Erfindung, deren Messverfahren möglichst nur eine geringe Anzahl an linearen relativen Zustell- und/oder Messbewegungen gepaart mit einer oder mehreren Vollumdrehungen des Zahnrad-Bauteils umfasst. Solche Ausführungsformen nutzen nämlich die hohe Geschwindigkeit des optisch schaltenden Messens.

Besonders bevorzugt sind Ausführungsformen der Erfindung, deren Messverfahren darauf beruht, dass das Zahnrad-Bauteil drehangetrieben wird, während der optisch schaltende Sensor Messungen vornimmt. Dabei wird insbesondere darauf geachtet, dass der Sensor nicht durch relative Zustellbewegungen jeweils Messpunkt für Messpunkt in den Nennabstand gebracht werden muss. Das Verändern des relativen Abstands des Sensors zur Oberfläche, die zu messen ist, ergibt sich dadurch, dass sich der relative Abstand dieser Oberfläche aufgrund der Drehbewegung des Zahnrad-Bauteils ändert.

Bisher hat eine taktile Teilungsmessung an einem Zahnrad-Bauteil pro Zahnflanke mehrere Sekunden gedauert, woraus sich für das gesamte Zahnrad-Bauteil eine Meßzeit von bis zu mehreren Minuten ergeben kann. Mit einer Koordinaten-Messvorrichtung der Erfindung, die mit einem optischen Schaltsensor und einem Regelsystem in Form von Hardware und/oder Software ausgestattet ist, kann die Teilungsmessung an allen Zahnflanken desselben Zahnrad-Bauteils innerhalb von einigen Sekunden bis zu deutlich unter einer Minute erfolgen.

Die Erfindung setzt auf den Einsatz von Fokus-Trigger-Sensoren als optische Schaltsensoren. Diese Fokus-Trigger-Sensoren haben eine große Lichtintensität und nutzen, bedingt durch ihr physikalisches Funktionsprinzip, einen sehr kleinen Lichtpunkt. Dieser Lichtpunkt ist dadurch sehr hell. Auch bei steilen Antastwinkeln wird noch ein verwertbarer Teil des Lichts in die (Empfangs-)Optik des Sensors zurückreflektiert. Das sind wichtige Eigenschaften, was den Einsatz solcher Fokus-Trigger-Sensoren für Verzahnungsmessungen anbelangt.

Es ist ein weiterer Vorteil der Fokus-Trigger-Sensoren, dass der "Lichtkegel" besonders schlank ist, falls ein Laser als Emitter eingesetzt wird. Ein besonders schlanker Lichtkegel ist gleichbedeutend mit einer Reduktion von Abschattungen. Daher sind laser-basierte Fokus-Trigger-Sensoren besonders zum Messen von Zahnflanken geeignet.

Ein Fokus-Trigger-Sensor hat nur einen charakteristischen Abstand (Nennabstand genannt), bei dem er hochgenau misst. Linearitätsfehler der Sensorik oder optische Fehler der Linsen, die dazu führen könnten, dass das Messsignal fehlerhaft ist, sind durch dieses Prinzip ausgeschlossen. Dieses Prinzip hat aber den Nachteil, dass Fokus-Trigger-Sensoren nur zum indirekten Messen geeignet sind, indem man den Abstand des Sensors zur Oberfläche verändert, um Messpunkt für Messpunkt den Nennabstand zu finden. Dies erfordert eine hochgenaue, messende Linearachse. Im Vergleich zu direkt messenden optischen Sensoren ist dieses indirekte Messen für viele Anwendungen unattraktiv.

Das Verfahren zur erfindungsgemässen Verzahnungsmessung nutzt jedoch nicht die Änderung des Abstands des Sensors zur Oberfläche durch Bewegung des Sensors, sondern durch die kontinuierliche Drehung des Zahnrads und die geschickte Anordnung des Sensors gegenüber der Zahnrad-Oberfläche. Man nutzt somit gemäß Erfindung die besonderen Eigenschaften des Zahnrades, nämlich die sich periodisch wiederholende Annäherung der Zahnflanken auf den Lichtstrahl des Sensors zu, bei kontinuierlicher Drehung. Der Sensor wird immer dann getriggert, wenn die Oberfläche den Nennabstand zum Sensor erreicht hat.

Die Erfindung nutzt zum Messen also nicht ein (lineares) Nachführen parallel zur optischen Sensorachse, um den Fokus (den Nennabstand) zu erreichen.

Die Erfindung setzt somit auf eine geeignete Gesamtkonstellation, bei der sich der relative Abstand zwischen der Oberfläche des Zahnrades und dem Sensor periodisch ändert. Beim Erreichen des Nennabstands wird jeweils ein Triggersignal erzeugt und es werden die momentanen Positionswerte zur weiteren Verarbeitung festgehalten, um die momentane Relativposition im Koordinatensystem zu bestimmen. Beim eigentlichen Durchführen des Messverfahrens der Erfindung wird somit nicht auf eine Linearverschiebung des Sensors sondern auf eine kontinuierliche Drehbewegung des Zahnrad-Bauteils gesetzt.

Das Verfahren der Erfindung eignet sich besonders für eine Teilungsmessung, bei der eine schnelle, kontinuierliche Drehbewegung des Zahnrad-Bauteils durchgeführt wird, während der Sensor (mindestens zeitweise) relativ zur Rotationsachse des Zahnrad-Bauteils ruht. Damit wird eine schnelle Messwertaufnahme ermöglicht.

Das Verfahren der Erfindung eignet sich z.B. auch für eine Messung der Flankenlinien von Zahnflanken, bei der eine schnelle, kontinuierliche Drehbewegung des Zahnrad-Bauteils durchgeführt wird, während der Sensor parallel zur Rotationsachse des Zahnrad-Bauteils linear bewegt wird. Damit lässt sich in kurzer Zeit die Flankenlinie aller Zähne ermitteln.

Die erfindungsgemäße Vorrichtung und das Verfahren der Erfindung ermöglichen schnelle Verzahnungsmessungen, da keine Nachführung erforderlich ist und da man eine kontinuierliche, schnelle Drehung nutzbar macht. Ausserdem ist die Erfindung sehr genau und kostengünstig.

Vorteilhafte Ausgestaltungen der erfindungsgemäßen Koordinaten-Messvorrichtung und des Verfahrens sind den abhängigen Ansprüchen zu entnehmen.

Die Erfindung lässt sich im Zusammenhang mit 1D-, 2D- und 3D-Oberflächen-Messungen an Zahnrädern verwenden.

### ZEICHNUNGEN

Ausführungsbeispiele der Erfindung werden im Folgenden unter Bezugnahme auf die Zeichnungen näher beschrieben.
- **FIG. 1**: zeigt eine perspektivische Ansicht einer Koordinaten-Messvorrichtung, die gemäß Erfindung mit einem optischen Schaltsensors ausgestattet ist;
- **FIG. 2**: zeigt eine vergrößerte perspektivische Ansicht eines Teils einer Koordinaten-Messvorrichtung der Erfindung, die einen optischen Schaltsensor umfasst;
- **FIG. 3**: zeigt eine schematisierte Darstellung der Elemente und des Strahlengangs eines beispielhaften optischen Schaltsensors;
- **FIG. 4**: zeigt eine schematische Perspektivansicht einer Photodiode, deren lichtempfindlicher Bereich in vier Segmente unterteilt ist;
- **FIG. 5**: zeigt das Blockdiagramm einer beispielhaften Auswertevorrichtung, die zur Verwendung mit einer Photodiode der Fig. 4 geeignet ist;
- **FIG. 6A**: zeigt in schematischer Form drei unterschiedliche
- - **6C**: Beleuchtungssituationen und die entsprechende logische Auswertung der Signale der vier einzelnen Diodensegmente;
- **FIG. 7**: zeigt eine schematische Perspektivansicht eines Abschnitt eines Stirnrades zusammen mit einem optischen Schaltsensor;
- **FIG. 8A**: zeigt in einer schematischen Draufsicht einen Abschnitt eines Stirnrades zusammen mit dem beispielhaften Strahlengang eines optischen Schaltsensors in einer Startposition;
- **FIG. 8B**: zeigt in einer schematischen Draufsicht einen Abschnitt des Stirnrades und Schaltsensors der Fig. 8A beim Messen der rechten Flanke eines weiteren Zahnes des Stirnrads;
- **FIG. 8C**: zeigt in einer schematischen Draufsicht einen Abschnitt des Stirnrades und Schaltsensors der Fig. 8A beim Messen einer linken Flanke eines Zahnes des Stirnrads;
- **FIG. 9A**: eine schematische Darstellung des akkumulierten Zahn-zu-Zahn Teilungsfehlers an den linken Zahnflanken eines Stirnrads;
- **FIG. 10A**: zeigt eine schematische Perspektivansicht eines Abschnitts eines Stirnrades zusammen mit einem weiteren optischen Schaltsensor, wobei anhand dieser Figur die Messung einer Flanken(längs)line erläutert wird;
- **FIG. 10B**: zeigt eine schematische Perspektivansicht des Abschnitts des Stirnrades der Fig. 10A, wobei die Relativposition des optischen Schaltsensors und des Stirnrades in einer Zwischenposition nach zwei Umdrehungen des Stirnrades gezeigt ist;
- **FIG. 10C**: zeigt eine schematische Perspektivansicht des Abschnitts des Stirnrades der Fig. 10A, wobei die Relativposition des optischen Schaltsensors und des Stirnrades in einer Zwischenposition nach weiteren Umdrehungen des Stirnrades gezeigt ist.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

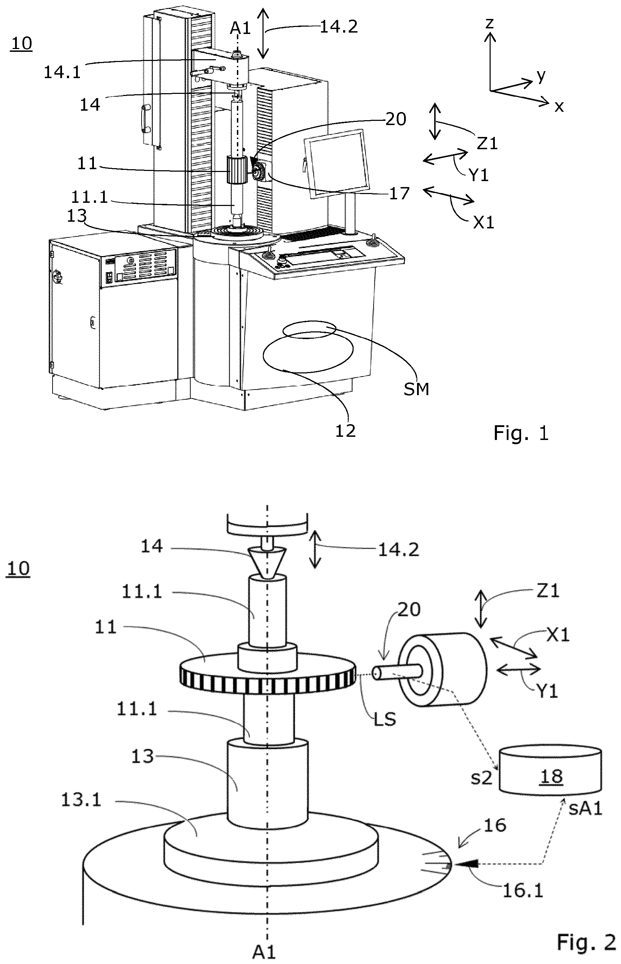

In einer vorteilhaften Ausführungsform der Erfindung, die in Fig. 1 gezeigt ist, geht es um ein automatisches, CNC-gesteuertes Verzahnungsmesszentrum 10, das hier generell als Koordinaten-Messvorrichtung 10 bezeichnet wird. Die Koordinaten-Messvorrichtung 10 ist im Prinzip geeignet zum Prüfen von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung, um nur einige Einsatzmöglichkeiten aufzuzählen.

Im Rahmen der Erfindung geht es jedoch um das schnelle und zuverlässige Messen von Zahnrad-Bauteilen 11, wie Stirnräder, Kegelräder und dergleichen.

Die Koordinaten-Messvorrichtung 10 umfasst im gezeigten Beispiel einen über eine NC-Steuerung 12 antreibbaren (Dreh-)Tisch 13 und ein mitlaufendes Zentriermittel 14. Der (Dreh-)Tisch 13 und das mitlaufende Zentriermittel 14 sind so angeordnet, dass ein zu messendes Bauteil 11 koaxial zwischen dem (Dreh-)Tisch 13 und dem Zentriermittel 14 einspannbar ist, wie in Fig. 1 anhand eines Stirnrads 11 gezeigt. Die Zähne des Stirnrads 11 sind hier und in Fig. 2 nur andeutungsweise gezeigt.

Das Stirnrad 11 weist im gezeigten Beispiel eine Welle 11.1 auf, die sich nach oben und unten erstreckt. Die NC-Steuerung 12 steht mit den Antriebseinheiten bzw. Motoren der verschiedenen Achsen der Koordinaten-Messvorrichtung 10 in Verbindung. Diese Details sind nicht in Fig. 1 sichtbar, da sich diese Elemente hinter einer Verkleidung befinden.

Vorzugsweise ist ein Mitnehmer (nicht dargestellt) formschlüssig mit dem (Dreh-)Tisch 13 verbunden, der durch einen Drehantrieb, gesteuert durch die NC-Steuerung 12, um eine erste Rotationsachse A1 drehbar ist. Das Zentriermittel 14 kann z.B. an einem Arm 14.1 sitzen, der in der Höhe verschoben werden kann, wie durch den Doppelpfeil 14.2 angedeutet. Innerhalb des Armes 14.1 ist das mitlaufende Zentriermittel 14 so gelagert, dass es um eine vertikale Achse rotieren kann, die sich mit der Rotationsachse A1 deckt, und dass es beim Einspannen des Zahnrad-Bauteils 11 gegen eine Rückstellkraft nach oben verschoben werden kann.

Die Koordinaten-Messvorrichtung 10 der Erfindung muss nicht zwingend mit einem mitlaufenden Zentriermittel 14 oder Gegenhalter ausgestattet sein. Auch kann der Aufbau des (Dreh-)Tischs 13 und die Befestigung des Zahnrad-Bauteils 11 am (Dreh-)Tisch 13, je nach Bedarf, anders ausgeführt sein.

Details einer weiteren vorteilhaften Ausführungsform der Erfindung sind in Fig. 2 gezeigt.

Dem Drehtisch 13 ist bei der erfindungsgemässen Koordinaten-Messvorrichtung 10 vorzugsweise ein Winkelmesssystem 16 (Winkelgeber) zugeordnet, das Signale sA1 bereitstellt, die eine genaue Aussage über die antriebsseitige Winkelposition des Mitnehmers, respektive des (Dreh-)Tischs 13 zulässt. Das Winkelmesssystem 16 kann z.B. unterhalb des Tisches 13 angeordnet sein und ist daher in Fig. 1 nicht sichtbar. In Fig. 2 ist ein solches Winkelmesssystem 16 am rechten Rand schematisch durch eine Winkelskala mit einem schwarzen Zeiger 16.1 dargestellt, der das Signal sA1 bereitstellt.

Das Winkelmesssystem/Winkelsensor 16 kann Signale sA1 bereitstellen, die eine Aussage über die momentane antriebsseitige Winkelposition des (Dreh-)Tischs 13 und somit des Bauteils 11 zulässt. In Fig. 2 ist das Bereitstellen des Signals durch einen gestrichelten Pfeil mit der Bezeichnung sA1 angedeutet.

Gemäß Erfindung kann die Koordinaten-Messvorrichtung 10 mehrere NC-gesteuerte Achsen umfassen. Im gezeigten Ausführungsbeispiel handelt es sich um drei Linearachsen X1, Y1, Z1 und um die bereits erwähnte Rotationsachse A1. Diese Achsen X1, Y1, Z1, A1 sind dazu ausgelegt, relative Zustellbewegungen und relative Messbewegungen des Messaufbaus 17 samt eines daran angebrachten optischen Schaltsensors 20 relativ zum Bauteil 11 auszuführen. Die eigentliche relative Messbewegung wird durch das Drehantreiben des Zahnrad-Bauteils 11 um die Rotationsachse A1 erzeugt. Eine Abstandsänderung, z.B. durch das linear Zustellen des Sensors mit der Y1-Achse, findet beim eigentlichen Messen nicht statt.

Der optische Schaltsensor 20 ist bei allen Ausführungsformen ein berührungslos arbeitender Sensor, der als Fokus-Trigger-Sensor ausgelegt ist. In den Figuren 1 und 2 ist schematisch angedeutet, dass der Fokus-Trigger-Sensor so am Messaufbau 17 angeordnet ist, dass er in der Lage ist, einen Lichtstrahl LS entlang einer optischen Achse in Richtung einer Objektebene OE des Bauteils 11 auszusenden. Aufgrund der Tatsache, dass der optische Schaltsensor 20 an dem Messaufbau 17 der Koordinaten-Messvorrichtung 10 sitzt, wie in den Figuren 1 und 2 angedeutet, kann dieser optische Schaltsensor 20 unter Einsatz einer oder mehrerer der NC-gesteuerten Achsen X1, Y1, Z1, A1 eine Zustellbewegungen relativ zu der Objektebene OE des Zahnrades 11 ausführen.

Sobald der optische Schaltsensor 20 eine geeignete Messposition erreicht hat, wird das Zahnrad-Bauteil 11 um die Rotationsachse A1 gedreht. Durch periodische Abstandsänderungen, die sich aufgrund der periodisch am Zahnrad-Bauteil 11 angeordneten Zähne ergeben, gerät der optische Schaltsensor 20 von Zeit zu Zeit (idealerweise 1 mal pro Zahnflanke) in eine Position relativ zur Oberfläche der Zahnflanken, die dem Nennabstand NA entspricht. In diesen Momenten löst der Schaltsensor 20 jeweils ein Schaltsignal s2 aus.

Die in den Figuren 1 und 2 gezeigte Anordnung der NC-gesteuerten Achsen X1, Y1, Z1, A1 ist als Beispiel zu verstehen. Die NC-gesteuerten Achsen können auch anders angeordnet sein und die Anzahl NC-gesteuerten Achsen kann z.B. auch geringer sein als in den Figuren 1 und 2 gezeigt.

Ein Fokus-Trigger-Sensor ist im Sinne der vorliegenden Erfindung ein optischer Schaltsensor 20, der immer dann ein Schaltsignal s2 bereitstellt, wenn der Sensor relativ zu der Objektebene OE den Nennabstand NA erreicht.

Bei den einfachsten Ausführungsformen der Erfindung wird der optische Schaltsensor 20 durch den Einsatz einer oder mehrerer der NC-gesteuerten Achsen X1, Y1, Z1, A1 entlang seiner optischen Achse in Richtung der Objektebene OE zugestellt. Sobald der Nennabstand NA zur Objektebene OE erreicht ist, gibt der Schaltsensor 20 ein Schaltsignal ab, das in Fig. 2 mit dem Bezugszeichen s2 bezeichnet ist.

Die entsprechende Startposition liegt bei allen Ausführungsformen vorzugsweise komplett ausserhalb der Zahnlücken des Zahnrad-Bauteils 11, damit dieses Bauteil 11 ohne Kollision mit dem Sensor 20 gedreht werden kann.

Da die relative Zustellbewegung des Schaltsensors 20 in Bezug zu der Objektebene des Bauteils 11 in einem exakt definierten Koordinatensystem (z.B. in dem x, y z-Koordinatensystem) erfolgt, kann die Koordinaten-Messvorrichtung 10 beim Auftreten des Schaltsignals s2 die Istposition des Schaltsensors 20 relativ zu der Objektebene OE des Zahnrad-Bauteils 11 speichern und/oder auswerten.

Ausgehend von dieser Startposition, die beispielsweise durch das linear Zustellen des Sensors 20 relativ zur Objektebene OE des Zahnrad-Bauteils 11 und durch ein Beobachten des Schaltsignals s2 aufgesucht wurde, wird dann das eigentliche Meßverfahren gestartet. In den meisten Fällen umfasst das Meßverfahren das Drehbewegen des Zahnrad-Bauteils 11 und in manchen Fällen kann der Sensor 20 relativ zum Zahnrad-Bauteil 11 verlagert werden (z.B. parallel zur A1-Rotationsachse zum Messen des Flanken(längs)profils).

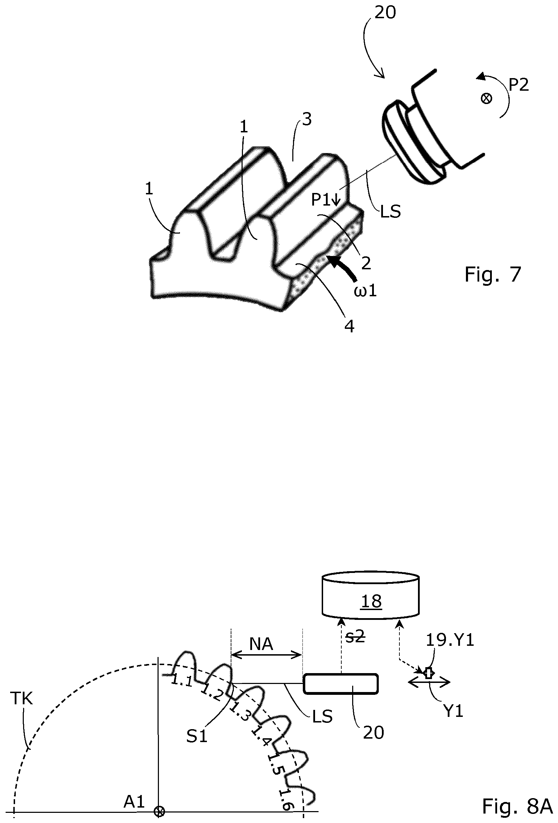

Vorzugsweise umfasst die Koordinaten-Messvorrichtung 10 bei allen Ausführungsformen mindestens einen Wegsensor 19, der einer der mehreren NC-gesteuerten Achsen X1, Y1, Z1 zugeordnet ist, und mindestens einen Winkelsensor 16, welcher der drehantreibbaren Aufnahme 13, 14 zugeordnet ist. Der Wegsensor 19.X1 der X1-Achse stellt z.B. das Signal sx1 zur Verfügung. Das Signal des Wegsensors 19.Y1, welcher der Y1-Achse zugeordnet ist, wird mit sY1 und das Signal des Wegsensors 19.Z1 der Z1-Achse mit sZ1 bezeichnet. Die Wegsensoren sind in den Figuren 8A bis 8C angedeutet.

Sobald das Schaltsignal s2 des Schaltsensor 20 anliegt (d.h. wenn der Schaltsensor 20 getriggert wurde), können z.B. alle Istwerte der betroffenen Achsen gespeichert werden, d.h. es können z.B. die Signale einer oder mehrerer der Linearachsen sX1, sY1, sZ1 und die Winkelangabe des Winkelsensor 16 in einen Speicher geschrieben werden.

Zu diesem Zweck kann die Koordinaten-Messvorrichtung 10 bei allen Ausführungsformen einen Speicher 18 umfassen oder die Koordinaten-Messvorrichtung 10 kann bei allen Ausführungsformen mit einem Speicher 18 verbunden werden, der dazu ausgelegt ist Istdaten des mindestens einen Wegsensors 19 und des mindestens einen Winkelsensors 16 zu speichern, sobald der Autofokus-Sensor das Schaltsignal s2 bereitstellt. In Fig. 2 ist durch gestrichelte Signalpfeile sA1, s2 angedeutet, dass diese Signale beispielsweise an den Speicher 18 übergeben werden.

Vorzugsweise wird bei allen Ausführungsformen die Übergabe der Signale, die von dem Wegsensor 19 und dem Winkelsensor 16 stammen, durch das Schaltsignal s2 getriggert.

Je nach Definition des Schaltsignals s2, kann dieses Schaltsignal s2 z.B. an einem Enable-Eingang eines Gatters anliegen. Falls das Schaltsignal s2 von einer logischen "0" auf eine logische "1" wechselt, so bewirkt der Enable-Eingang z.B. das Öffnen eines Speicherzugangs zu dem Speicher 18, um so die Istdaten (z.B. die Signale sA1, sX1, sY1, sZ1) in den Speicher 18 zu übernehmen.

Da der Nennabstand NA des Schaltsensor 20 und damit auch die Position des Triggerpunktes am vorderen Ende des Nennabstandes (respektive des Lichtstrahls LS) eine bekannte Größe ist, kann man aus den Istdaten der Weg-/Winkelsensoren die Lage des entsprechenden Messpunktes der Objektebene OE genau rechnerisch ermitteln. Die verschiedensten Ausgestaltungen der Erfindung bauen auf diesem Prinzip auf.

Es gibt verschiedene Fokus-Trigger-Sensoren, die sich zum Einsatz in einer Koordinaten-Messvorrichtung 10 der Erfindung eignen und die z.B. beim Messen von Zahnrad-Bauteilen 11 mit ausreichender Genauigkeit schnell und zuverlässig verwertbare Informationen liefern.

Bei dem Fokus-Trigger-Sensor der Erfindung kann es sich z.B. um einen Sensor 20 handeln, dessen Funktion auf einem 4-Quadranten-Messansatz beruht.

Als Empfangsvorrichtung können bei allen Ausführungsformen z.B. charge-coupled devices (CCDs) zum Einsatz kommen, wobei mehrere dieser CCDs in einem bestimmten Muster zueinander angeordnet sind, um erkennen zu können, ob ein optischer Sender des Schaltsensors 20 den Nennabstand NA zu einer Oberfläche (Objektebene OE genannt) erreicht hat. CCD steht hier für ladungsgekoppeltes Bauteil. Sobald das Muster der CCD-Elemente in einer vorbestimmten Art und Weise durch reflektiertes Licht ausgeleuchtet wird, kann der entsprechend ausgestattete Fokus-Trigger-Sensor das Schaltsignal s2 ausgeben.

Bei dem speziell erwähnten 4-Quadranten-Messansatz sind vorzugsweise die CCDs, oder andere lichtempfindliche Bauteile, als vier nebeneinander befindliche Quadranten in einer gemeinsamen Ebene angeordnet. Diese gemeinsame Ebene steht exakt senkrecht zum Mittelstrahl des an der Objektebene OE reflektierten Lichtstrahls LS. Wenn alle vier Quadranten exakt dieselbe Lichtmenge empfangen, dann wird das Schaltsignal s2 ausgegeben.

Der hier beschriebene 4-Quadranten-Messansatz lässt sich auch mit lichtempfindlichen Bauteilen realisieren, deren lichtempfindlicher Bereich z.B. in 2 statt der genannten 4 Segmente unterteilt ist.

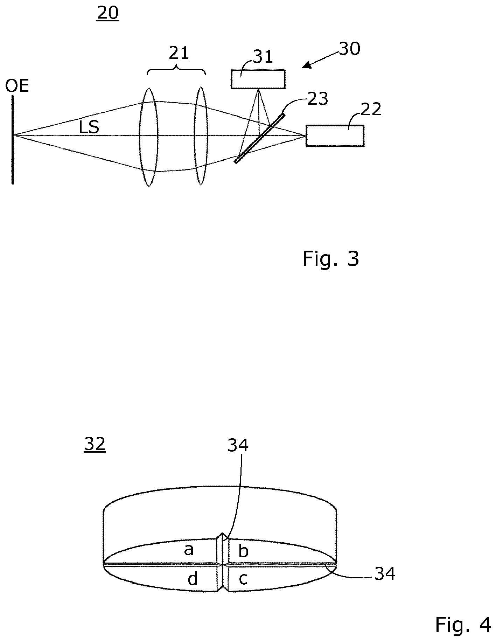

Gemäß Erfindung kommt vorzugsweise bei allen Ausführungsformen ein passiv arbeitender Fokus-Trigger-Sensor als Schaltsensor 20 zum Einsatz, wobei durch das Wort "passiv" hier beschrieben wird, dass dieser Schaltsensor 20 keine Mittel zum Anpassen der Abstrahloptik (z.B. zum Verschieben von Linsen oder zum Verstellen einer Linsengruppe 21, siehe Fig. 3) umfasst. D.h. ein passiv arbeitender Fokus-Trigger-Sensor hat keine Zoom- oder Autofokus-Optik. Ein passiv arbeitender Fokus-Trigger-Sensor hat im Sinne der Erfindung einen fest vorgegebenen Nennabstand NA, der höchstens zu Zwecken der Feinabstimmung (z.B. im Rahmen einer Wartung) justiert werden kann. Das Wort "Fokus" bezieht sich hier nicht auf ein automatisiertes Anpassen des Fokus, respektive des Nennabstandes NA des optischen Senders des Schaltsensors 20, sondern auf das automatisierte Erkennen, ob der Nennabstand NA erreicht ist. Dieses automatisierte Erkennen erfolgt durch eine geeignete Anordnung und/oder (Ver-) Schaltung von optisch empfindlichen Empfangssensoren (wie z.B. CCDs, Phototransistoren oder Photodioden).

In Fig. 3 ist der prinzipielle Aufbau und Strahlengang eines beispielhaften Schaltsensors 20 der Erfindung in schematisierter Form gezeigt. Es handelt sich bei dieser Abbildung lediglich um ein Beispiel, das zur Erläuterung herangezogen wird.

Es wird in Fig. 3 von einem Lichtstrahl LS ausgegangen, der von einer punktförmigen Quelle 22 ausgeht. Der Lichtstrahl LS wird durch einen Strahlungsteiler 23 geführt. Als Strahlungsteiler 23 kann z.B. ein Strahlteilerwürfel, Prisma oder ein semitransparenter Spiegel dienen. Es folgt ein Abbildungsobjektiv, das hier beispielhaft und schematisch durch eine Linsengruppe 21 dargestellt ist. Die (Laser-) Lichtquelle, die hier beispielsweise als Quelle 22 dient, ist zeichnerisch durch einen rechteckigen Schaltblock dargestellt.

Das von der Objektebene OE reflektierte Licht gelangt über eine teilreflektierende Schicht des Strahlungsteilers 23 zu einem optischen Empfänger 30. Der optische Empfänger 30 kann z.B. eine oder mehrere Blenden und andere optische Elemente umfassen. Bei allen Ausführungsformen umfasst der optische Empfänger 30 einen Detektor 31, der in Fig. 3 zeichnerisch durch einen rechteckigen Schaltblock dargestellt ist.

Der optische Empfänger 30 kann bei allen Ausführungsformen z.B. zwei Punktlochblenden umfassen, die vor dem Detektor 31 sitzen. Immer dann, wenn sich z.B. der Abstand zwischen der Objektebene OE und dem Schaltsensor 20 vergrössert oder verkleinert, werden die reflektierten Lichtanteile zunehmend durch die Punktlochblenden abgeblockt. Dagegen erreichen die reflektierten Lichtanteile eine Empfangsfläche des Detektors 31 mit maximaler Intensität, wenn die Überlagerung der Lichtpunkte, die von den beiden Punktlochblenden erzeugt werden, genau übereinander liegen.

Indem man z.B. ein analoges Ausgangssignal des Detektors 31 auswertet, kann das Intensitätsmaximum ermittelt werden. Sobald der Nennabstand NA erreicht wurde, befindet sich die empfangene Lichtintensität auf dem Maximum und der Schaltsensor 20 kann das Schaltsignal s2 ausgeben.

Ein Detektor 31 der Erfindung kann auch ohne Punktlochblenden als Vier-Quadrantenempfänger eingesetzt werden. In Fig. 4 ist in rein schematischer Form eine (Silizium-)Photodiode 32 des Standes der Technik gezeigt, deren lichtempfindliche Oberfläche in vier gleichgrosse Segmente a, b, c, d unterteilt ist (der beschriebene Ansatz funktioniert z.B. auch mit nur zwei gleichgrossen Segmenten). Die Segmente a, b, c, d bilden vier eng nebeneinander in einer gemeinsamen Ebene liegende Quadranten. Zum elektrischen Trennen der Quadranten sind hier beispielsweise V-förmige Gräben 34 vorgesehen. Die (Silizium-)Photodiode 32 der Fig. 4 ist bewusst in einer Orientierung gezeigt, bei der die lichtempfindliche Oberfläche nach unten weist. Die Diode 32 kann in der gezeigten Orientierung z.B. in dem Detektor 31 der Fig. 3 zum Einsatz kommen.

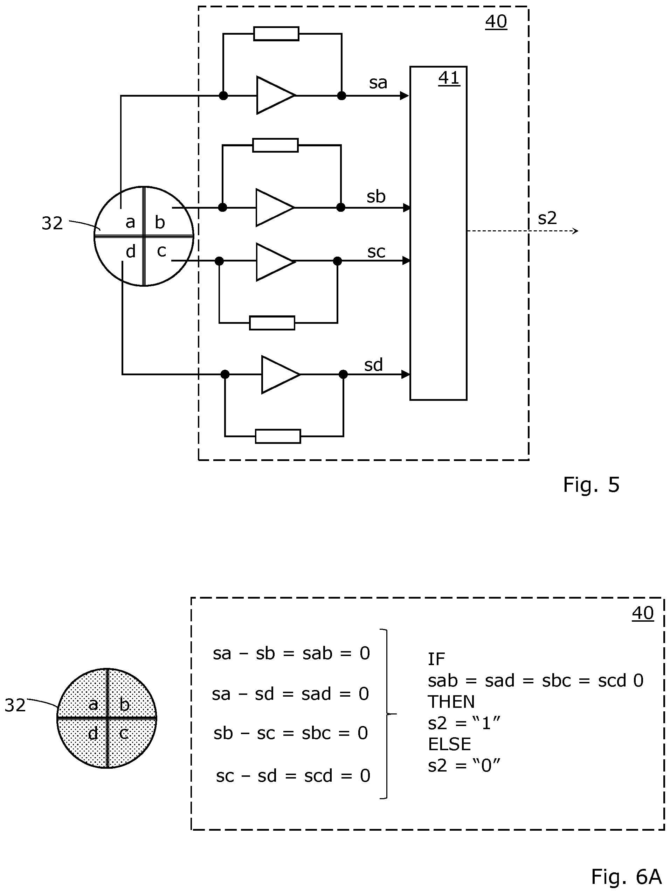

Das Funktionsprinzip einer solchen (Silizium-)Photodiode 32, die in vier Quadranten a, b, c, d unterteilt ist, wird nun beispielhaft anhand der Fig. 5 beschrieben, wobei in Fig. 5 nur eine von mehreren Implementierungslösungen gezeigt ist.

In Fig. 5 ist die (Silizium-)Photodiode 32 der Fig. 4 von oben gezeigt. Die lichtempfindliche Oberfläche liegt hier parallel zur Zeichenebene. Jedes der vier Segmente a, b, c, d kann z.B. mit einer eigenen Auswerteschaltung einer Auswertevorrichtung 40 verbunden sein, wie schematisch angedeutet. Jede dieser Auswerteschaltungen umfasst hier eine beispielhaft gezeigte Verstärkerstufe mit Rückkopplung. Derartige Schaltungen sind hinlänglich bekannt und werden hier daher nur andeutungsweise gezeigt. Durch die Verstärkerstufe wird das Ausganssignal eines jeden Segments a, b, c, d hochverstärkt. Die Ausganssignale sind mit sa, sb, sc und sd bezeichnet. Dann werden diese vier hochverstärkten Signale einer Komparatorschaltung 41 zugeführt.

Die Komparatorschaltung 41 ist im gezeigten Beispiel als Differenzbildner ausgelegt. Das Prinzip wird im Folgenden anhand eines Beispiels erläutert. In den Figuren 6A - 6C sind lediglich die (Silizium-)Photodiode 32 der Fig. 4 und die inneren Logikverknüpfungen der Auswertevorrichtung 40 gezeigt. Die logischen Auswertungen, die z.B. in einer solchen Auswertevorrichtung 40 ablaufen können, sind beispielhaft in Form von Gleichungen beschrieben.

Wenn alle vier Segmente a, b, c, d gleichmässig beleuchtet sind, was der Fall ist wenn der reflektierte Lichtstrahl mittig senkrecht auf lichtempfindliche Oberfläche trifft, dann sind alle vier Signale sa, sb, sc und sd identisch. Eine paarweise Differenzbildung von jeweils zwei der Signale sa, sb sowie sc, sd ergibt jeweils Null, wie in Fig. 6A durch die vier Gleichungen sa - sb = sab = 0, sa - sd = sad = 0, sb - sc = sbc = 0 und sc - sd = scd = 0 dargestellt. Wenn man dann die Ergebnisse sab, sad, sbc und scd dieser beiden Differenzbildungen nochmals miteinander in Bezug setzt (z.B. durch eine weitere Differenzbildung), so kann ermittelt werden, ob alle vier Segmente a, b, c, d in dem zu bewertenden Moment exakt dieselbe Lichtintensität empfangen.

In Fig. 6A ist die logische Verknüpfung der Signale sa, sb, sc, sd anhand einer Pseudo-Programmiersprache gezeigt, die eine WENN-DANN-SONST (IF-THEN-ELSE) Auswertung vornimmt. Falls alle Signale sa, sb, sc, sd gleich Null sind, dann wird das Schaltsignal s2 auf eine logische "1" gesetzt. D.h. in diesem Fall wird ein Schaltsignal s2 ausgegeben. In allen anderen Fällen bleibt das Schaltsignal s2 auf einer logischen "0".

Am Ausgang der Auswertevorrichtung 40 kann z.B. eine Triggerschaltung vorgesehen sein, die ein Ausgangssignal s2 bereitstellt. Das Ausgangssignal s2 kann z.B. von einer logischen "0" auf eine logische "1" angehoben werden.

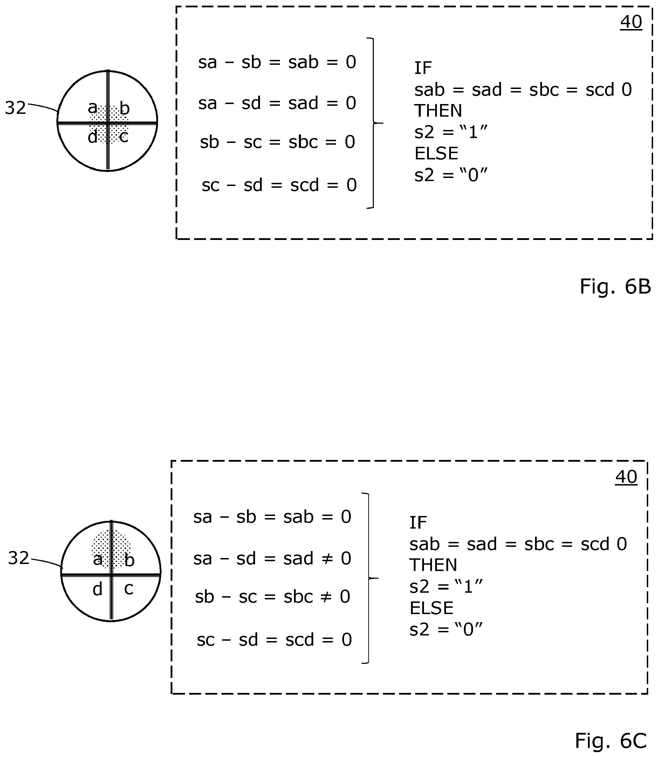

Das Prinzip der Fig. 6A funktioniert auch dann, wenn die vier Segmente a, b, c, d nicht vollständig ausgeleuchtet sind, solange alle Segmente a, b, c, d dieselbe Lichtintensität empfangen. In Fig. 6B ist ein entsprechendes Beispiel gezeigt. Auch im Falle der Fig. 6B würde das Ausgangssignal s2 z.B. von einer logischen "0" auf eine logische "1" angehoben.

Anhand der Fig. 6C wird nun eine Situation beschrieben, die sich ergibt wenn der Nennabstand NA nicht erreicht ist. In diesem Fall liegt der Lichtpunkt des reflektierten Lichts z.B. im Bereich der beiden Segmente a und b. Die Segmente c und d empfangen hier kein Licht. Zwei der vier Gleichungen sind hier ungleich Null. Damit würde auch die folgende Gleichung erneut eine Null ergeben: sab - scd = 0. Da nun nicht alle Signale oder Terme sa, sb, sc, sd gleich Null sind, ist die Bedingung sa = sb = sc = sd = 0 nicht erfüllt. Dadurch kann man auf eine ungleichmässige Ausleuchtung der Segmente a, b, c, d schliessen. In diesem Fall bleibt das Schaltsignal s2 auf logisch "0".

Vorzugsweise kommt bei allen Ausführungsformen, die auf dem Einsatz eines 4-Quadranten-Messansatzes beruhen, ein Regelsatz zur Auswertung der Signale der vier Segmente a, b, c, d zum Einsatz, der so gestaltet ist, dass alle wichtigen Sonderfälle und Situationen zuverlässig erkannt werden können.

Der Regelsatz kann bei allen Ausführungsformen in Form einer logischen Gatterschaltung implementiert sein. Er kann aber bei allen Ausführungsformen auch in Form von Software, wie durch die Pseudo-Programmiersprache der Figuren 6A bis 6C gezeigt, implementiert sein. Im letzteren Fall werden die Signale der vier Segmente a, b, c, d vorzugsweise digitalisiert, bevor sie anhand eines entsprechenden software-implementierten Regelsatzes verarbeitet werden.

Es gibt verschiedenste Möglichkeiten Komparatoren aufzubauen, um nach dem in den Figuren 5 sowie 6A - 6C gezeigten und hier beschriebenen Prinzip einen Vergleich der Intensitäten vornehmen zu können. Das hier Beschriebene ist lediglich als Beispiel zu verstehen.

General kann postuliert werden, dass ein Fokus-Trigger-Sensor, der nach dem 4-Quadranten-Messansatz arbeitet, empfangsseitig vier Sensorbereiche a, b, c, d umfasst, die wie vier Quadranten zueinander in einer gemeinsamen Ebene angeordnet sind. Jeder dieser vier Sensorbereiche a, b, c, d ist mit je einem Messeingang einer Auswertevorrichtung 40 verbunden, wie z.B. in Fig. 5 gezeigt, um das Schaltsignal s2 bereitzustellen, sobald alle vier Sensorbereiche a, b, c, d dieselbe reflektierte Lichtintensität des Lichtstrahls empfangen.

Gemäß einer anderen Ausführungsform der Erfindung wird ein Fokus-Trigger-Sensor eingesetzt, dessen Funktion auf dem Foucault-Prinzip beruht. Ein solcher Fokus-Trigger-Sensor hat z.B. sendeseitig eine Abbildungsoptik 21 zum Aussenden des Lichtstrahls LS und empfangsseitig zwei oder mehre als zwei Differenzdioden zum Empfangen des an der Objektebene OE reflektierten Lichtstrahls. Nach dem Foucault-Prinzip wird z.B. eine optische Foucault-Schneide eingeblendet, die es ermöglicht das Erreichen des Nennabstandes NA schneller und klarer zu erkennen, je nachdem ob die eine Hälfte oder die andere Hälfte des optischen Strahlengangs mit Hilfe der optischen Schneide abgeschattet wird. Es ergibt sich ein deutlich erkennbarer Kontrastübergang.

Statt eine optische Foucault-Schneide zu verwenden, kann bei allen Ausführungsformen auch ein Muster, eine Marke oder ein Symbol zu Abbildungszwecken verwendet werden, ähnlich wie die erwähnte Schneide.

Das Foucault-Prinzip kann auch bei Ausführungsformen angewendet werden, die, ähnlich wie z.B. in Fig. 5 gezeigt, mehrere Photodioden oder Segmente an einer Photodiode umfassen. Falls der Nennabstand NA noch nicht erreicht ist, kann z.B. die Lichtintensität auf die beiden Segmente a und b scheinen, wie z.B. in Fig. 6C gezeigt. Falls der Nennabstand NA exakt erreicht wurde, sind alle 4 Segmente a, b, c, d gleichmäßig ausgeleuchtet, wie in Fig. 6B gezeigt. Falls der Nennabstand NA unterschritten wird, kann z.B. die Lichtintensität auf die beiden Segmente c und d scheinen.

Die Fig. 7 zeigt eine perspektivische Ansicht eines Abschnitts eines Stirnrades 11 zusammen mit einem beispielhaften optischen Schaltsensor 20. In Fig. 7 sind in etwa die typischen Dimensionen eines geeignet optischen Schaltsensors 20 im Verhältnis zum Nennabstand NA (der im gezeigten Beispiel 20mm beträgt) und einem kleinen Stirnrad 11 gezeigt, das hier einen Teilkreisdurchmesser hat, der ca. 70 mm beträgt.

Aufgrund der Abschattung, die sich daraus ergeben kann, dass benachbarte Zähne 1 eng nebeneinander sitzen, muss der Lichtstrahl LS des optischen Schaltsensors 20 in nahezu allen Anwendungsfällen schräg auf die zu messende Oberfläche (z.B. auf die Zahnflanke 2) gerichtet werden. Umso tiefer der Lichtstrahl LS zum Messen in eine Zahnlücke 3 eindringen muss, umso steiler muss der Lichtstrahl LS angestellt werden.

Bei dem in Fig. 7 gezeigten Beispiel, muss der optische Schaltsensor 20 aus der gezeigten Stellung gegen den Uhrzeigersinn nach links gedreht werden, wenn der Lichtpunkt, der vom Lichtstrahl LS auf der Oberfläche der Zahnflanke 2 erzeugt wird, entlang der Zahnflanke 2 nach unten in Richtung Zahnfuß 4 wandern soll. Das Wandern des Lichtpunktes nach unten ist in Fig. 7 schematisch durch einen kurzen Pfeil P1 angedeutet. Das entsprechende Drehen des Schaltsensors 20 ist durch den kreisbogenförmigen Pfeil P2 angedeutet. Diese Bewegungen P1, P2 werden vorzugsweise im Rahmen der Zustellbewegung ausgeführt, die dazu dient die Startposition zu erreichen.

Bei dem in Fig. 7 gezeigten Beispiel wird der Lichtstrahl LS relativ zur Zahnoberfläche verkippt. Anhand der Figuren 8A bis 8C wird nun eine besonders bevorzugte Ausführungsform beschrieben, die auf einer Verschiebung des Sensors 20 in X- und Y-Richtung zusammen mit dem Drehantreiben des Zahnrad-Bauteils 11 beruht.

Wenn man z.B. in Fig. 8A den Sensor 20 über die X- und Y-Achsen so bewegt, dass der Fokuspunkt im Nennabstand NA am vorderen Ende des Lichtstrahls LS auf dem Teilkreis TK verschoben wird und dabei das Zahnrad-Bauteil 11 mitbewegt, so kann relativ zu der Zahnoberfläche jeden beliebige Winkel vorgegeben werden.

Es hat sich gezeigt, dass man auch beim schrägen Auftreffen des Lichtstrahls LS einen verwertbaren reflektieren Lichtanteil am Detektor 31 empfangen kann. Das liegt daran, dass die Oberfläche der zu messenden Zahnrad-Bauteile 11 (z.B. im Falle von Zahnradflanken 2) eine Rauigkeit haben, die für ein ausreichend gutes Reflektionsverhalten sorgt.

Es liegt jedoch auf der Hand, dass es für die Reflektion eines Lichtanteils mit ausreichender Intensität gewisse Grenzen gibt. Wenn der Lichtstrahl LS zum Beispiel tangential entlang eine Zahnflanke 2 verläuft, dann sind keine verwertbaren Ergebnisse mehr zu erwarten.

Es ist Vorteil des schaltenden Sensors 20, dass dieser auch noch bei steilen Antastwinkeln ein sehr genaues Signal liefert. Vor allem bei der Verwendung eines Lasers als Lichtquelle 22 kann man eine hohe Lichtintensität nutzen, so dass auch bei steilen Winkeln noch etwas Licht in dem Empfänger 31 zurückreflektiert wird.

Durch das spezielle Verfahren der Erfindung wird ein sehr kleiner, sehr heller Lichtpunkt genutzt, der unabhängig von der Neigung der Oberfläche immer den gleichen Nennabstand NA hat, so dass immer ein genaues Signal s2 erzeugt wird. Erst wenn der Antastwinkel so groß ist, dass der Sensor 20 nicht mehr arbeitet, kann man nicht mehr messen. Es wird aber kein fehlerhaftes Abstandssignal erzeugt, wie bei nahezu allen direkt messenden Sensoren, die eingangs genannt sind.

Gemäss Erfindung liegt der Einstrahlwinkel des Lichtstrahls LS bei allen Ausführungsformen vorzugsweise in einem Winkelbereich zwischen ±5 und ±70 Grad, wenn es um das Messen von Metall-Zahnrädern 11 geht. Ein besonders günstiger Einstrahlwinkel liegt im Winkelbereich zwischen ±10 und ±50 Grad (diese Gradangaben beruhen auf der Annahme, dass ein senkrecht zur Oberfläche einfallender Lichtstrahl LS einem Winkel von 0 Grad entspricht).

Vorzugsweise umfasst die Koordinaten-Messvorrichtung 10 bei allen Ausführungsformen eine Art Regelsystem, das aus Hardware und/oder Software aufgebaut ist. Sinn und Zweck dieses Regelsystems ist das Steuern der Relativbewegungen beim Zustellen des optischen Schaltsensors 20 zum Zahnrad-Bauteil 11 und das Ausführen der relativen Messbewegung(en) beim Durchführen der eigentlichen Messung(en).

Das Regelsystem gibt einerseits die erforderlichen Bewegungen vor und andererseits erhält das Regelsystem Ist-Daten von den Wegsensoren 19.X1, 19.Y1, 19.Z1 und/oder dem/den Winkelmesssystem 16. Ausserdem verarbeitet das Regelsystem das Schaltsignal s2.

In Fig. 1 ist beispielhaft ein Software-Modul SM als Teil der Steuerung 12 gezeigt, das vorzugsweise Teil oder Kern des genannten Regelsystems ist. Das Software-Modul SM und/oder das Regelsystem ist dazu ausgelegt aus den Istdaten mindestens eine geometrische Angabe (z.B. die Winkelposition bezogen auf die Rotationsachse A1) der Objektebene OE des Zahnrades 11 zu ermitteln.

Im Folgenden werden nun verschiedene Messverfahren der Erfindung beschrieben.

**Ermittlung von Teilungsfehlern an einem Zahnrad 11:** Anhand der Figuren 8A bis 8C, werden nun die Verfahrensschritte eines ersten beispielhaften Messverfahrens der Erfindung zum Messen von Teilungsfehlern beschrieben. In diesen Figuren ist ein optischer Schaltsensor 20 gezeigt, der einen Lichtstrahl LS aussendet.

Damit der Lichtstrahl LS möglichst steil auf die zu messende Oberfläche gelangt, ist die optische Achse des Schaltsensors 20 seitlich gegenüber der Rotationsachse A1 des Bauteils 11 versetzt. Diese Aussage gilt für alle bevorzugten Messverfahren der Erfindung.

Die Rotationsachse A1 steht hier senkrecht auf der Zeichnungsebene während die optische Achse des Schaltsensors 20 in der Zeichnungsebene liegt.

In Fig. 8A ist der Teilkreis TK des Stirnrads 11 als strichlierter Kreis gezeigt. Bei einem Stirnrad 11 ist der Teilkreis TK ein unendlich dünner Schnitt durch den Teilzylinder des Stirnrads 11. Von den Zähnen, die am Aussenumfang des Stirnrads 11 angeordnet sind, sind in Fig. 8A lediglich sechs Zähne gezeigt. Diese Zähne sind hier mit den Bezugszeichen 1.1 bis 1.6 bezeichnet. Die in Fig. 8A gezeigte Momentaufnahme zeigt den Sensor 20 in der Startposition. Der Lichtstrahl LS trifft hier die rechte Zahnflanke des Zahnes 1.2 genau im Schnittpunkt S1 mit dem Teilkreis TK.

Um diese Startposition zu erreichen, kann in einem vorbereitenden Verfahrensschritt der relative Abstand zwischen dem Schaltsensor 20 und der rechten Zahnflanke des Zahnes 1.2 durch eine Relativbewegung (Zustellbewegung genannt) parallel zur Y1-Achse reduziert werden, während das Zahnrad-Bauteil 11 beispielweise nicht drehangetrieben wird. Das Anfahren der Startposition kann schnell und direkt erfolgen, da die Koordinaten-Messvorrichtung 10 die Sollgeometrie kennt und da auch der Nennabstand NA des Sensors 20 eine bekannte Größe ist. Um die Startposition zu erreichen, braucht der Sensor 20 optisch nicht aktiv zu sein. Sobald die Startposition erreicht ist, kann diese Position eingefroren werden.

In Fig. 8A ist das Vorgeben der Startposition mit einem optisch inaktiven Sensor 20 dadurch angedeutet, dass der Sensor 20 kein Schaltsignal s2 abgibt (das Schaltsignal ist daher durchgestrichen dargestellt). Das Überführen des Sensors 20 in die Startposition wird im gezeigten Beispiel durch das Bewegen nur der Y1-Achse vorgenommen.

In einem ersten Verfahrensschritt der eigentlichen Messung wird nun das Stirnrad 11 entgegen dem Uhrzeigersinn um seine Rotationsachse A1 gedreht, wobei während des Drehens permanent ein Winkelsensor 16 überwacht/ausgewertet wird, der dem drehangetriebenen Tisch 13 der Koordinaten-Messvorrichtung 10 zugeordnet ist. Die entsprechende Drehbewegung ist mit einem ω1 gekennzeichnet. Im Rahmen dieses ersten Verfahrensschrittes wird die Drehbewegung überwacht, bis der Schaltsensor 20 ein Schaltsignal s2 ausgibt. Das Schaltsignal s2 kann z.B. in dem Speicher 18 festgehalten oder durch ein Software-Modul ausgewertet werden. Der Wegsensor 19.Y1 braucht während der eigentlichen Messung nicht ausgelesen zu werden, da der Schaltsensor 20 stationär im Raum steht, oder da er eine Scanbewegung parallel zur z- oder zur x-Achse ausführt, wie später anhand von Beispielen beschrieben wird.

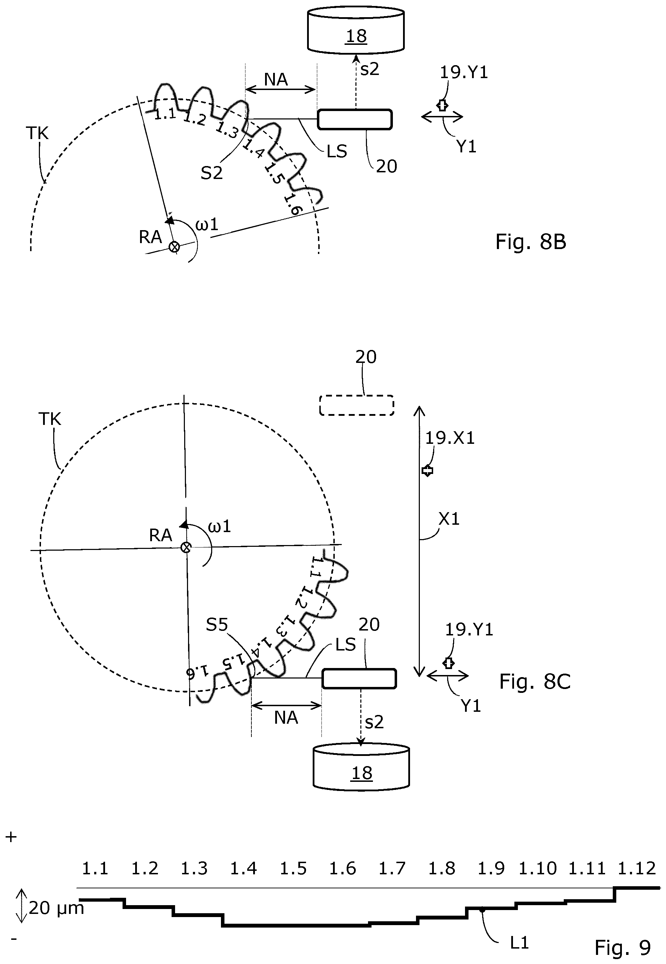

Sobald der Schaltsensor 20 ein Schaltsignal s2 ausgibt, hat die Oberfläche (Objektebene OE) der rechten Flanke des nächsten Zahns 1.3 den Nennabstand NA zum Schaltsensor 20 erreicht. Da der Nennabstand NA bekannt ist, kann man nun erneut aus der Winkel-Ist-Position exakt die Istposition des Schnittpunkts S2 berechnen. Fig. 8B zeigt den Moment des Erreichens der Winkel-Ist-Position.

Das Zahnrad-Bauteil 11 wird (kontinuierlich) weiter gedreht und der Lichtstrahl LS, bzw. der Sensor 20, detektiert die Winkel-Ist-Position der rechten Zahnflanke des nächsten Zahnes 1.5, usw.

Zu jeder Zahnflanke wird die zugehörige Winkel-Ist-Position erfasst, indem z.B. jeweils das Winkelmesssystem 16 ausgelesen wird.

Diese Verfahrensschritte wiederholen sich so lange wie das Zahnrad-Bauteil 11 gedreht wird und/oder so lange bis der Sensor 20 abgeschaltet wird.

Vorzugsweise wird mindestens eine Vollumdrehung des Zahnrad-Bauteils 11 durchgeführt, bis beispielsweise für alle rechten Flanken der Zähne 1 des Zahnrads 11 die Winkel-Ist-Positionen der Schnittpunkte mit dem Teilkreis TK ermittelt wurden.

Da für das Zahnrad 10 die Zähnezahl z (hier z.B. z = 25) bekannt ist, kann man den (Soll-)Teilungswinkel τ wie folgt berechnen: τ = 360°/z

Falls es sich bei dem Stirnrad 11 um ein ideales Stirnrad handelt, so sind alle z Zähne 1 in exakt gleichen Winkelabständen τ entlang des 360 Grad-Vollkreises verteilt und alle Zähne haben dieselbe Zahnbreite. Aufgrund von fertigungsbedingten Abweichungen ergeben sich in der Praxis bei Zahnrädern 11 jedoch Teilungsfehler. Dieser Teilungsfehler können mit den oben beschriebenen Schritten schnell und zuverlässig ermittelt werden.

Da man den Teilungswinkel τ genau kennt, kann man ermitteln, ob der Nennabstand NA in Fig. 8B z.B. genau dann erreicht wird, wenn das Zahnrad 11 um exakt einen Teilungswinkel τ weiter gedreht wurde. Falls das Schaltsignal s2 vor dem Erreichen des exakten Teilungswinkels τ ausgegeben wird, so hat die rechte Flanke des Zahns 1.3 einen Winkel-Istabstand auf dem Teilkreis TK, der kleiner ist als der Winkel-Sollabstand. Falls das Schaltsignal s2 erst nach dem Erreichen des exakten Teilungswinkels τ ausgegeben wird, so hat die rechte Flanke des Zahns 1.3 einen Winkel-Istabstand auf dem Teilkreis TK, der grösser ist als der Winkel-Sollabstand.

Anhand der Fig. 8C wird nun beispielhaft das Messen der linken Zahnflanken beschrieben. Um die linken Zahnflanken des Zahnrads 11 messen zu können, wird gemäss Erfindung vorzugsweise bei allen Ausführungsformen der Schaltsensor 20 durch eine Verlagerungsbewegung parallel zur X1-Achse in eine neue Startposition relativ zum Zahnrad 11 gebracht, wie in Fig. 8C gezeigt. Die neue Startposition kann z.B. durch eine Linearbewegungen der Linearachse X1 und eventuell durch eine kleine Zustell- oder Abstandbewegung der Linearachse Y1 erreicht werden. Die ursprüngliche Position des Schaltsensors 20, die er beim Messen der rechten Flanken inne hatte, ist in Fig. 8C strichliert gezeigt. Der eigentliche Messvorgang beim Messen der linken Flanken ist derselbe wie beim Messen der rechten Flanken.

Das optische Ermitteln des Teilungsfehlers kann gemäss Erfindung für alle rechten und/oder für alle linken Zahnflanken eines Bauteils 11 ermittelt werden, wobei das oben beschriebene Verfahren entsprechend angewendet wird.

Die bisher beschriebenen Messungen erfolgen vorzugsweise alle in der Teilkreisebene, die in den Figuren 8A bis 8C mit der Zeichnungsebene zusammen fällt. In den gezeigten Fällen lag der Lichtstrahl LS jeweils in der Teilkreisebene.

Man kann mit der Vorrichtung 20 und dem Verfahren der Erfindung aber den Teilungsfehler z.B. auch in mehreren Ebenen des Teilzylinders messen. In diesem Fall sind zusätzlich Bewegungen parallel zur z-Achse (z.B. unter Einsatz der Z1-Linearachse) erforderlich.

Die bisherigen Beispiele haben sich primär auf Stirnrad-Bauteile 11 bezogen, da die Messungen am Stirnrad einfacher zu erklären sind. Man kann die Erfindung aber auch zum Messen von Kegelrad-Bauteilen 11, Schneckenrädern, Verzahnwerkzeugen und anderen Zahnrad-Bauteilen 11 einsetzen.

Fig. 9 zeigt exemplarisch eine schematische Darstellung des kumulierten Zahn-zu-Zahn Teilungsfehlers an den linken Zahnflanken der Zähne eines Stirnrads 11. Links ist durch einen senkrechten Doppelpfeil der Maßstab von 20 µm gezeigt. Die Messgenauigkeit der Vorrichtung der Erfindung muss im Bereich von 0,1-0,3 Mikrometer liegen, um brauchbare Aussagen z.B. in Bezug auf den erwähnten Teilungsfehler zu ermöglichen.

Bei dem in Fig. 9 gezeigten Beispiel handelt es sich um ein Stirnrad mit einer Zähnezahl z = 12. Die Zähne sind in Fig. 9 von 1.1 bis 1.12 nummeriert. Der 12. und letzte Zahn ist der Bezugszahn. Die kumulierte Teilungsabweichung wird durch den Linienzug L1 angedeutet. Nahezu alle Zähne 1.1 bis 1.11 haben einen Teilungsfehler auf der linken Zahnflanke.

Entsprechend kann man z.B. mit der Vorrichtung und dem Verfahren der Erfindung auch den kumulierten Zahn-zu-Zahn Teilungsfehler an den rechten Zahnflanken eines Stirnrads ermitteln.

**Messen der Zahndicke an einem Zahnrad 11:** Wenn z.B. die Zahndicken der Zähne auf dem Teilkreis TK ermittelt werden sollen, dann kann man die rechten und die linken Flanken aller Zähne messen, um anschliessend aus den Winkelabständen die Zahndicke zu errechnen.

**Messen des Teilungsfehlers der Zahnlücken eines Zahnrads 11:** Wenn z.B. der Teilungsfehler der Zahnlücken 3 eines Stirn- oder Kegelrads 11 auf dem Teilkreis TK ermittelt werden soll, so kann man entweder diesen Teilungsfehler aus den zuvor gemessenen Zahn-zu-Zahn Teilungsfehlern errechnen, oder man kann ihn mit einem entsprechenden Verfahren unter Einsatz des optischen Schaltsensors 20 direkt messen, indem man die linken und die rechten Zahnflanke mit dem Lichtstrahl LS schaltend abtastet, während das entsprechende Zahnrad-Bauteil 11 kontinuierlich gedreht wird.

Die Erfindung ermöglicht aber auch andere Messungen mit dem optischen Schaltsensor 20 durchzuführen. Im Folgenden sind weitere Beispiele genannt und kurz beschrieben, wobei den Möglichkeiten, die sich durch den Einsatz eines optischen Schaltsensors 20 in einer Koordinaten-Messvorrichtung 10 ergeben, nahezu keine Grenzen gesetzt sind.

**Ermittlung von Flankenlinienabweichungen an einem Zahnrad 11:** Zur Messung der Flankenlinien der Zahnflanken an dem Zahnrad-Bauteil 11, wird als Messbewegung eine Relativbewegung vorgenommen, die eine vertikale Bewegungskomponente (parallel zur z-Achse) umfasst. Zusätzlich zu dieser vertikalen Relativbewegung wird während der Messung eine Drehbewegung des Zahnrad-Bauteils 11 um die Rotationsachse A1 vorgenommen.

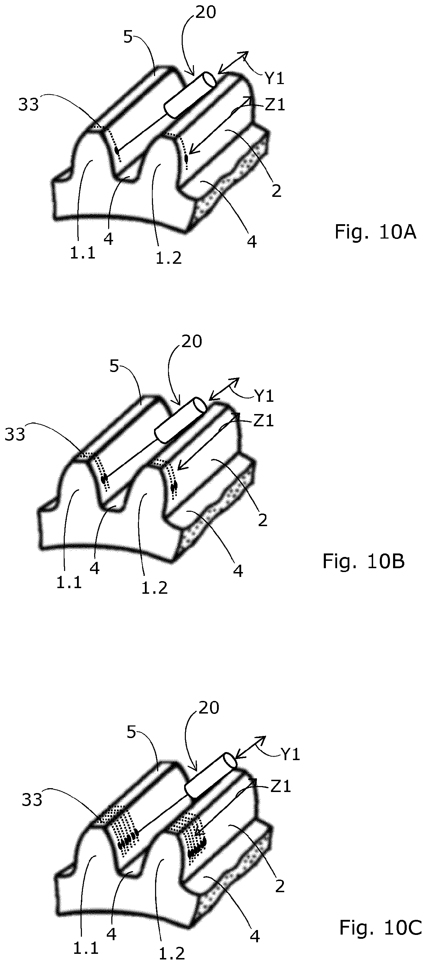

Anhand der Figuren 10A bis 10C, wird beispielhaft das Verfahren zur Ermittlung der Flankenlinienabweichungen beschrieben. In diesen Figuren sind erneut nur zwei Zähne 1.1 und 1.2 eine Zahnrad-Bauteils 11 gezeigt. Nachdem der Sensor 20 eine Startposition relativ zum Zahnrad-Bauteil 11 erreicht hat, wird das Zahnrad-Bauteil 11 drehangetrieben und der Ausgang des Sensors 20 wird überwacht bzw. ausgewertet.

In Fig. 10A ist exakt der Zeitpunkt gezeigt, bei dem der relative Abstand zwischen dem Sensor 20 und der rechten Flanke des Zahnes 1.1 den Nennabstand NA erreicht. Exakt in diesem Moment wird ein Schaltsignal s2 ausgegeben. Da sich das Zahnrad-Bauteil 11 relativ zum Sensor 20 dreht, während der Sensor 20 permanent den Lichtstrahl LS in Richtung des Zahnrad-Bauteils 11 sendet, ergibt sich eine Lichtspur 33, die sich, wie in Fig. 10A angedeutet, entlang des Umfangs des Zahnrad-Bauteils 11 erstreckt.

Diese Lichtspur 33 endet jeweils ein Stück oberhalb des Zahnfusses 4, da der jeweils vorauseilende Zahn den Lichtstrahl LS abschattet. Bei jeder rechten Zahnflanke ermittelt der Sensor 20, respektive die Vorrichtung 10 diejenige Winkelstellung des Zahnrad-Bauteils 11, bei der jeweils das Schaltsignal s2 ausgegeben wird. Wenn es sich um ein ideales Zahnrad-Bauteil 11 handelt, dann liegen die so ermittelten Messpunkt jeweils genau einen Teilungswinkel τ auseinander. An jeder rechten Flanke der Zähne 1.1 und 1.2 ist je ein Messpunkt durch einen kleinen schwarzen Punkt dargestellt, der auf der Lichtspur 33 liegt.

Um nun das Flankenlängsprofil mit dem Verfahren der Erfindung messen zu können, wird der Sensor 20 relativ zum Zahnrad-Bauteil 11 parallel zur z-Achse (kontinuierlich oder in Schritten) verlagert. Das kann z.B. durch das Aktivieren der Zl-Linearachse erfolgen. Diese Z1-Linearachse ermöglicht eine Bewegung des Sensors 20 bei gleichbleibendem y-Abstand entlang der Zahnflanke. Diese Bewegung des Sensors 20 erfolgt parallel zu Rotationsachse A1, falls es sich um ein gradverzahntes Stirnrad 11 handelt, wie in Fig. 10A gezeigt.

Falls der Sensor 20 relativ zum Zahnrad-Bauteil 11 parallel zur z-Achse kontinuierlich verlagert wird, so ergibt sich eine spiralförmig umlaufende Lichtspur 33, wie in den Figuren 10A bis 10C gezeigt. Falls diese Linearbewegung jedoch nur schrittweise erfolgt, so ergeben sich mehrere separate Lichtspurkreise.

In Fig. 10A ist die Situation nach einer ersten vollständigen Umdrehung des Zahnrad-Bauteils 11 um die Rotationsachse A1 gezeigt. Falls die Relativbewegung des Sensor 20 relativ zum Zahnrad-Bauteil 11 langsam erfolgt im Vergleich zur Winkelgeschwindigkeit ω1, dann liegen die einzelnen Bahnen der spiralförmig umlaufenden Lichtspur 33 dicht aneinander. In der Fig. 10B kann man die Situation nach einer zweiten Umdrehung des Zahnrad-Bauteils 11 erkennen. Auch hier sind wieder die Messpunkte durch kleine schwarze Punkte dargestellt.

Fig. 10C zeigt die Situation nach mehreren Umdrehungen des Zahnrad-Bauteils 11. Jede Bahn der Lichtspur 33 hat auf jeder Zahnflanke einen Messpunkt. Anhand der Anordnung der Messpunkt entlang einer Flanken(längs)linie, kann man erkennen, dass diese Messpunkte jeweils auf leicht unterschiedlichen Positionen liegen. Aus den einzelnen Messpunkten kann man zusammen mit der Winkelinformation und der z-Position des Sensors 20 den Verlauf der Flanken(längs)linien alle rechten Flanken ermitteln.

Um z.B. die Flanken(längs)linie aller linken Flanken zu ermitteln, sollte der Sensor 20 in eine andere Startposition bewegt werden. Das Verfahren bleibt ansonsten das gleiche.

Die Funktion der Vorrichtung 10 wird im Folgenden anhand eines einfachen Beispiels näher erläutert.

Wir gehen z.B. davon aus, dass das Zahnrad-Bauteil 11 eine Drehung mit einer Geschwindigkeit von einer Umdrehung pro Sekunde macht. Insgesamt werden 60 Vollumdrehungen des Zahnrad-Bauteils 11 gemacht, während der Sensor 20 eine langsame, kontinuierliche Bewegung parallel zur z-Achse ausführt (Scanbewegung genannt), damit während der 60 Vollumdrehungen die gesamte Zahnbreite des Zahnrad-Bauteils 11 abgefahren wird. Dies bedeutet, dass in zwei Minuten die Zahnflanken (links und rechts) aller Zähne mit einer Punktdichte von 60 Punkten und die Teilung (ebenfalls links und rechts) gemessen werden kann. Die beschriebene Messung hat zusätzlich den Vorteil, dass sie sogar unabhängig von der Anzahl der Zähne ist.

**Messung des Zahnprofils an einem Zahnrad 11:** Auf gleicher Basis lassen sich ebenfalls durch kontinuierliche, schnelle Drehung des Zahnrad-Bauteils 11 bei gleichzeitiger Verschiebung des Sensors 20 parallel zur x-Richtung (Scanbewegung) die Profile aller Zähne ermitteln.

Auch hierzu ein einfaches Zahlenbeispiel: Wir gehen z.B. davon aus, dass das Zahnrad-Bauteil 11 eine Drehung mit einer Geschwindigkeit von einer Umdrehung pro Sekunde macht. Insgesamt werden 60 Vollumdrehungen des Zahnrad-Bauteils 11 gemacht, während der Sensor 20 eine langsame, kontinuierliche Scanbewegung parallel zur x-Achse ausführt, so dass die gesamte Profillänge (Profiltiefe) abgefahren wird. Dies bedeutet dass in zwei Minuten die Profile (links und rechts) aller Zähne mit einer Punktdichte von 60 Punkten und die Teilung (ebenfalls links und rechts) gemessen werden. Auch diese Messung ist unabhängig von der Anzahl der Zähne.

Besonders bevorzugt sind Ausführungsformen der Erfindung, deren Messverfahren möglichst nur eine geringe Anzahl an linearen relativen Zustellbewegungen zum Erreichen einer Startposition und beim eigentlichen Messen nur eine Messbewegung (Scanbewegung) gepaart mit einer oder mehreren Vollumdrehungen des Zahnrad-Bauteils 11 umfasst. Solche Ausführungsformen nutzen nämlich optimal die hohe Geschwindigkeit des optischen Schaltsensors 20 gepaart mit einer periodischen Abstandänderung, die sich aus dem Drehen des Zahnrad-Bauteils 11 ergibt.

D.h. der optische Schaltsensor 20 bleibt entweder beim Messen stationär im Raum stehen, während sich das Zahnrad-Bauteil 11 dreht, oder der optische Schaltsensor 20 macht beim Messen eine (lineare) Scanbewegung, während sich das Zahnrad-Bauteil 11 dreht.

In den bisher beschriebenen Beispielen kommt eine Koordinaten-Messvorrichtung 10 mit vier NC-gesteuerten Achsen X1, Y1, Z1, A1 zum Einsatz. Es liegt auf der Hand, dass die Achsen auch anders konfiguriert sein können. So kann z.B. die X1-Achse und/oder die Y1-Achse durch eine Schwenkachse ersetzt werden. Die Gesamtzahl der Achsen kann bei allen Ausführungsformen auch kleiner sein als die genannten vier Achsen X1, Y1, Z1, A1. Die Koordinaten-Messvorrichtung 10 kann bei allen Ausführungsformen auch mehr als vier Achsen aufweisen.

Bei Ausführungsformen, bei denen eine direkte Zustellung des Sensors 20 in die Startposition erfolgt, kann der Sensor 20 auch manuell in die Startposition gebracht werden (durch Verschieben und/oder Verschwenken). In diesem Fall kann die entsprechende NC-gesteuerte Achse (z.B. die Y1-Achse) entfallen.

Die mit A1 bezeichnete Rotationsachse muss nicht zwingend als NC-gesteuerte Achsen ausgelegt sein. Wichtig ist, dass die Rotationsachse A1 bei allen Ausführungsformen ein sehr genau arbeitendes Winkelmesssystem aufweist. Der Antrieb der Rotationsachse A1 kann motorisch ohne genaue NC-Regelung oder sogar manuell erfolgen.

**Bezugszeichen:**

| | |
|---|---|
| Zähne | 1, 1.1 bis 1.z |
| Zahnflanke | 2 |
| Zahnlücke | 3 |
| Zahnfuß | 4 |
| Zahnkopf | 5 |
| Messgerät / Koordinaten-Messvorrichtung | 10 |
| Zahnrad-Bauteil | 11 |
| Welle | 11.1 |
| NC-Steuerung | 12 |
| (Dreh-)Tisch | 13 |
| Zentriermittel | 14 |
| Arm | 14.1 |
| Verschiebbarkeit | 14.2 |
| optionaler (Rauheits)Messtaster | 15 |
| Winkelmesssystem / Winkelsensor | 16 |
| Zeiger | 16.1 |
| Messaufbau | 17 |
| Speicher | 18 |
| Wegsensor | 19, 19.X1, 19.Y1, 19.Z1 |
| Schaltsensor (Fokus-Trigger-Sensor) | 20 |
| Linsengruppe / Abbildungsoptik | 21 |
| Quelle | 22 |
| Strahlungsteiler | 23 |
| | |
| optischer Empfänger | 30 |
| Detektor | 31 |
| Photodiode | 32 |
| Lichtspur | 33 |
| V-förmige Gräben | 34 |
| | |
| Auswertevorrichtung | 40 |
| Komparatorschaltung | 41 |
| Segmente | a, b, c, d |
| Rotationsachse | A1 |
| Linienzug | L1 |
| Lichtstrahl | LS |
| Mess-Modul | MM |
| Nennabstand | NA |
| Objektebene | OE |
| Pfeile | P1, P2, P3 |
| Profilkurve | Pk |
| Zahnhöhe ausgedrückt als Radius | ra, rb, rc |
| Signale | sX1, sY1, sZ1, sA1, s2 |
| Schnittpunkte | S1, S2, .... |
| (Dioden-)Signale | sa, sb, sc, sd |
| Signals | sab, scd, sad, sbc |
| Software-Modul | SM |
| Teilkreis | TK |
| Triggersignal | Ts(τ) |
| Teilungswinkel | τ |
| Koordinaten | x, y, z |
| Linearachsen | X1, Y1, Z1 |
| Relativbewegung parallel zur x Achse | X1 |
| Relativbewegung parallel zur y Achse | Y1 |
| Zähnezahl | z |
| | |
| Relativbewegung parallel zur z Achse | Z1 |
| Drehbewegung | ω1 |

## Patentansprüche

1. Koordinaten-Messvorrichtung (10) mit mehreren Achsen (X1, Y1, Z1, A1), mit einer drehantreibbaren Aufnahme (13, 14) für ein zu messendes Zahnrad-Bauteil (11) und mit einem Messaufbau (17), wobei die Koordinaten-Messvorrichtung (10) dazu ausgelegt ist Zustellbewegungen und Messbewegungen des Messaufbaus (17) relativ zum Zahnrad-Bauteil (11) auszuführen, **dadurch gekennzeichnet, dass** der Messaufbau (17) umfasst:
- einen optischen, berührungslos arbeitenden Schaltsensor (20),
∘ der als Fokus-Trigger-Sensor ausgelegt ist, wobei der Fokus-Trigger-Sensor so am Messaufbau (17) angeordnet ist, dass er in der Lage ist einen Lichtstrahl (LS) entlang einer optischen Achse in Richtung einer Objektebene (OE) des Zahnrad-Bauteils (11) auszusenden,
∘ wobei mit dem Fokus-Trigger-Sensor unter Einsatz einer oder mehrerer der Achsen (X1, Y1, Z1, A1) eine Scanbewegung relativ zu der Objektebene (OE) des Zahnrad-Bauteils (11) ausführbar ist, und wobei durch den Fokus-Trigger-Sensor immer dann ein Schaltsignal (s2) bereitstellbar ist, wenn die Objektebene (OE) relativ zu dem Fokus-Trigger-Sensor einen Nennabstand (NA) erreicht und wobei in dem Moment, in dem der Fokus-Trigger-Sensor das Schaltsignal (s2) abgibt, momentane Koordinateninformationen der Koordinaten-Messvorrichtung (10) ausgelesen und/oder gespeichert werden.

2. Koordinaten-Messvorrichtung (10) nach Anspruch 1, **dadurch gekennzeichnet, dass** der Fokus-Trigger-Sensor schräg zu der Objektebene (OE) des Zahnrad-Bauteils (11) angestellt ist, wobei der Winkel des Lichtstrahl (LS) zu der Objektebene (OE) vorzugsweise in dem Winkelbereich ±5 bis ±70 Grad liegt.

3. Koordinaten-Messvorrichtung (10) nach Anspruch 1 oder 2, **dadurch gekennzeichnet, dass** es sich bei dem Fokus-Trigger-Sensor um einen Sensor handelt, dessen Funktion auf einem 2-Segmenten oder einem 4-Quadranten-Messansatz beruht.

4. Koordinaten-Messvorrichtung (10) nach Anspruch 3, **dadurch gekennzeichnet, dass** der Fokus-Trigger-Sensor auf dem Quadranten-Messansatz beruht und empfangsseitig ein optisch empfindliches Bauteil, vorzugsweise eine Photodiode (32), mit vier Sensorbereichen (a, b, c, d) umfasst, die wie vier Quadranten zueinander in einer gemeinsamen Ebene angeordnet sind, wobei jeder der vier Sensorbereiche (a, b, c, d) mit je einem Messeingang einer Auswertevorrichtung (40) verbunden ist, um das Schaltsignal (s2) bereitzustellen, sobald alle vier Sensorbereiche (a, b, c, d) dieselbe reflektierte Lichtintensität des Lichtstrahls (LS) empfangen.

5. Koordinaten-Messvorrichtung (10) nach Anspruch 1, 2, 3 oder 4, **dadurch gekennzeichnet, dass** es sich bei dem Fokus-Trigger-Sensor um einen Sensor handelt, dessen Funktion auf dem Foucault-Prinzip beruht und der sendeseitig eine Abbildungsoptik (21) zum Aussenden des Lichtstrahls (LS) und empfangsseitig mehrere Differenzdioden (31, 32) zum Empfangen des an der Objektebene reflektierten Lichtstrahls (LS) umfasst.

6. Koordinaten-Messvorrichtung (10) nach Anspruch 1 oder 2, **dadurch gekennzeichnet, dass** es sich bei dem Fokus-Trigger-Sensor um einen Laserpunktsensor handelt, der einen Laser, vorzugsweise eine Laserdiode, zum Aussenden des Lichtstrahls (LS) umfasst.

7. Koordinaten-Messvorrichtung (10) nach einem der Ansprüche 1 bis 6, **dadurch gekennzeichnet, dass** die Koordinaten-Messvorrichtung (10) zusätzlich umfasst:
- mindestens einen Wegsensor (19, 19.X1, 19.Y1, 19.Z1), der einer der mehreren Achsen (X1, Y1, Z1, A1) zugeordnet ist,
- mindestens einen Winkelsensor (16), welcher der drehantreibbaren Aufnahme (13, 14) zugeordnet ist.

8. Koordinaten-Messvorrichtung (10) nach Anspruch 7, **dadurch gekennzeichnet, dass** die Koordinaten-Messvorrichtung (10) zusätzlich umfasst:
- einen Speicher (18), der dazu ausgelegt ist Istdaten des mindestens einen Wegsensors (19, 19.X1, 19.Y1, 19.Z1) und des mindestens einen Winkelsensors (16) zur Istposition des Schaltsensors (20) relativ zu der Objektebene (OE) des Zahnrades (11) zu speichern, sobald der Fokus-Trigger-Sensor das Schaltsignal (s2) bereitstellt.

9. Koordinaten-Messvorrichtung (10) nach Anspruch 7, **dadurch gekennzeichnet, dass** die Koordinaten-Messvorrichtung (10) zusätzlich umfasst:
- ein Software-Modul (SM), das dazu ausgelegt ist Istdaten des mindestens einen Wegsensors (19, 19.X1, 19.Y1, 19.Z1) und des mindestens einen Winkelsensors (16) zur Istposition des Schaltsensors (20) relativ zu der Objektebene (OE) des Zahnrades (11) zu verarbeiten, sobald der Fokus-Trigger-Sensor das Schaltsignal (s2) bereitstellt.

10. Koordinaten-Messvorrichtung (10) nach Anspruch 1, 2 oder 3, **dadurch gekennzeichnet, dass** anhand eines Software-Moduls (SM), das vorzugsweise Teil eines Regelsystems ist, aus den Istdaten der Koordinaten-Messvorrichtung mindestens eine geometrische Angabe der Objektebene (OE) des Zahnrades (11) ermittelbar ist.

11. Koordinaten-Messvorrichtung (10) nach Anspruch 1, 2, 3 oder 4, **dadurch gekennzeichnet, dass** anhand eines Software-Moduls (SM), das vorzugsweise Teil eines Regelsystems ist, ein automatisiert ablaufender Messvorgang in der Koordinaten-Messvorrichtung (10) durchführbar ist, anhand dessen
- eine Teilungsmessung des Zahnrad-Bauteils (11), und/oder
- eine Messung mindestens einer Flankenlinie des Zahnrad-Bauteils (11) durchführbar, und/oder
- eine Messung des Zahnprofils des Zahnrad-Bauteils (11) durchführbar ist/sind.

12. Verfahren zum Durchführen einer berührungslosen optischen Messung an einem Zahnrad-Bauteil (11) in einer Koordinaten-Messvorrichtung (10) mit den folgenden Schritten:
- Einbringen des Zahnrades (11) in die Koordinaten-Messvorrichtung (10),
- Durchführen einer ersten relativen Zustellbewegung unter Einsatz mindestens einer Achse (X1, Y1, Z1, A1) der Koordinaten-Messvorrichtung (10), um einen optischen, berührungslos arbeitenden Schaltsensor (20), der als Fokus-Trigger-Sensor ausgelegt ist, in eine Startposition relativ zu einer zu messenden Objektebene (OE) des Zahnrad-Bauteils (11) zu bringen,
- Durchführen einer optischen Messung des Zahnrad-Bauteils (11) unter Einsatz des Schaltsensors (20) mit den folgenden Teilschritten:
∘ Drehantreiben des Zahnrad-Bauteils (11) um seine Rotationsachse (A1),
∘ Bereitstellen von Schaltsignalen (s2) durch den Schaltsensor (20), wenn die Objektebene (s2) relativ zu dem Schaltsensor (20) den Nennabstand (NA) erreicht,
∘ Erfassen von Istdaten der Koordinaten-Messvorrichtung (10), sobald der Fokus-Trigger-Sensor das Schaltsignal (s2) bereitstellt,
∘ Ermitteln geometrischer Angaben des Zahnrad-Bauteils (11) aus den Istdaten.

13. Verfahren nach Anspruch 12, **dadurch gekennzeichnet, dass** zusätzlich zu dem Drehantreiben des Zahnrad-Bauteils (11) der Schaltsensor (20) eine Scanbewegungen ausführt.

14. Verfahren nach Anspruch 12 oder 13, **dadurch gekennzeichnet, dass** es durchgeführt wird, um
- eine Teilungsmessung des Zahnrad-Bauteils (11), und/oder
- eine Messung mindestens einer Flankenlinie des Zahnrad-Bauteils (11), und/oder
- eine Messung des Zahnprofils des Zahnrad-Bauteils (11)
vorzunehmen.

15. Verfahren nach einem der Ansprüche 12 bis 14, **dadurch gekennzeichnet, dass** der Fokus-Trigger-Sensor schräg zu der Objektebene (OE) des Zahnrad-Bauteils (11) angestellt wird, wobei der Winkel des Lichtstrahl (LS) zu der Objektebene (OE) vorzugsweise in dem Winkelbereich ±5 bis ±70 Grad liegt.

## Claims

1. A coordinate measuring apparatus (10) with a plurality of axes (X1, Y1, Z1, A1), a rotatably driveable receptacle (13, 14) for a gear workpiece (11) to be measured, and a measuring assembly (17), wherein the coordinate measuring apparatus (10) is designed to carry out feed movements and measuring movements of the measuring assembly (17) relative to the gear workpiece (11), **characterized in that** the measuring assembly (17) comprises:
- an optical, contactless operating switch sensor (20),
∘ which is designed as a focus trigger sensor, wherein the focus trigger sensor is arranged on the measuring assembly (17) in such a way that it is able to emit a light beam (LS) along an optical axis in the direction of an object plane (OE) of the gear workpiece (11)
∘ wherein a scanning movement relative to the object plane (OE) of the gear workpiece (11) can be carried out with the focus trigger sensor by using one or more of the axes (X1, Y1, Z1, A1), and wherein a switching signal (s2) can always be provided by the focus trigger sensor when the object plane (OE) has reached a nominal distance (NA) relative to the focus trigger sensor and wherein the current coordinate information of the coordinate measuring apparatus (10) is read out and/or stored at the moment when the focus trigger sensor provides the switching signal (s2).

2. A coordinate measuring apparatus (10) according to claim 1, **characterized in that** the focus trigger sensor is positioned obliquely with respect to the object plane (OE) of the gear workpiece (11), wherein the angle of the light beam (LS) to the object plane (OE) is preferably in the angular range ±5 to ±70 degrees.

3. A coordinate measuring apparatus (10) according to claim 1 or 2, **characterized in that** the focus trigger sensor concerns a sensor whose function is based on a 2-segment or a 4-quadrant measurement approach.

4. A coordinate measuring apparatus (10) according to claim 3, **characterized in that** the focus trigger sensor is based on the quadrant measurement approach and comprises on the receiving side an optically sensitive component, preferably a photodiode (32), having four sensor regions (a, b, c, d) which are arranged in a common plane like four quadrants, wherein each of the four sensor regions (a, b, c, d) is connected to a respective measuring input of an evaluation device (40) in order to provide the switching signal (s2) as soon as all four sensor regions (a, b, c, d) receive the same reflected light intensity of the light beam (LS).

5. A coordinate measuring apparatus (10) according to claim 1, 2, 3 or 4, **characterized in that** the focus trigger sensor concerns a sensor whose function is based on the Foucault principle and which has an imaging optical system (21) for emitting the light beam (LS) on the transmitting side and a plurality of differential diodes (31, 32) for receiving the light beam (LS) reflected at the object plane on the receiving side.

6. A coordinate measuring apparatus (10) according to claim 1 or 2, **characterized in that** the focus trigger sensor concerns a laser point sensor which comprises a laser, preferably a laser diode, for emitting the light beam (LS).

7. A coordinate measuring apparatus (10) according to one of the claims 1 to 6, **characterized in that** the coordinate measuring apparatus (10) additionally comprises:
- at least one displacement sensor (19, 19.X1, 19.Y1, 19.Z1) which is assigned to one of the plurality of axes (X1, Y1, Z1, A1),
- at least one angle sensor (16) which is associated with the rotationally drivable receptacle (13, 14).

8. A coordinate measuring apparatus (10) according to claim 7, **characterized in that** the coordinate measuring apparatus (10) further comprises:
- a memory (18) which is designed to store actual data of the at least one displacement sensor (19, 19.X1, 19.Y1, 19.Z1) and the at least one angle sensor (16) to the actual position of the switch sensor (20) relative to the object plane (OE) of the gearwheel (11) as soon as the focus trigger sensor provides the switching signal (s2).

9. A coordinate measuring apparatus (10) according to claim 7, **characterized in that** the coordinate measuring apparatus (10) additionally comprises:
- a software module (SM) which is designed to process actual data of the at least one displacement sensor (19, 19.X1, 19.Y1, 19.Z1) and the at least one angle sensor (16) to the actual position of the switch sensor (20) relative to the object plane (OE) of the gearwheel (11) as soon as the focus trigger sensor provides the switching signal (s2).

10. A coordinate measuring apparatus (10) according to claim 1, 2 or 3, **characterized in that** at least one geometrical indication of the object plane (OE) of the gearwheel (11) is determined from the actual data of the coordinate measuring apparatus (10) by means of a software module (SM) which is preferably part of a control system.

11. A coordinate measuring apparatus (10) according to claim 1, 2, 3 or 4, **characterized in that** a measuring operation conducted in an automated manner can be performed in the coordinate measuring apparatus (10) by means of a software module (SM), which is preferably part of a regulating system, on the basis of which
- a pitch measurement of the gear workpiece (11), and/or
- a measurement of at least one flank line of the gear workpiece (11) can be performed, and/or
- a measurement of the tooth profile of the gear workpiece (11) can be carried out.

12. A method of carrying out a contactless optical measurement on a gear workpiece (11) in a coordinate measuring apparatus (10), comprising the following steps:
- introducing the gearwheel (11) into the coordinate measuring apparatus (10),
- carrying out a first relative feed movement by using at least one axis (X1, Y1, Z1, A1) of the coordinate measuring apparatus (10) in order to move an optical switch sensor (20), which is designed as a focus trigger sensor and operates in a contactless manner, to a starting position relative to an object plane (OE) of the gear workpiece (11) to be measured,
- carrying out an optical measurement of the gear workpiece (11) by using the switch sensor (20), comprising the following sub steps:
∘ rotationally driving the gear workpiece (11) about its rotational axis (A1),
∘ providing switching signals (s2) through the switch sensor (20) when the object plane (s2) reaches the nominal distance (NA) relative to the switch sensor (20),
∘ detecting actual data of the coordinate measuring apparatus (10),
∘ determining geometrical data of the gear workpiece (11) from the actual data.

13. A method according to claim 12, **characterized in that** the switch sensor (20) performs a scanning movement in addition to the rotary drive of the gear workpiece (11).

14. A method according to claim 12 or 13, **characterized in that** it is carried out in order to perform:
- a pitch measurement of the gear workpiece (11), and/or
- a measurement of at least one flank line of the gear workpiece (11), and/or a measurement of the tooth profile of the gear workpiece (11).

15. A method according to one of the claims 12 to 14, **characterized in that** the focus trigger sensor is positioned obliquely with respect to the object plane (OE) of the gear workpiece (11), wherein the angle of the light beam (LS) to the object plane (OE) is preferably in the angular range ±5 to ±70 degrees.

## Revendications

1. Dispositif de mesure à coordonnées (10) avec plusieurs axes (X1, Y1, Z1, A1), comprenant un logement (13, 14) pouvant être entraîné en rotation pour un composant de roue dentée (11) à mesurer et comprenant un système de mesure (17), le dispositif de mesure à coordonnées (10) étant conçu pour réaliser des mouvements d'avance et des mouvements de mesure du système de mesure (17) par rapport au composant de roue dentée (11), **caractérisé en ce que** le système de mesure (17) comprend :
- un capteur de commutation (20) optique travaillant sans contact,
∘ qui est conçu comme un capteur de déclenchement, le capteur de déclenchement étant agencé sur le système de mesure (17), de sorte qu'il est en mesure d'émettre un faisceau lumineux (LS) le long d'un axe optique en direction d'un plan objet (OE) du composant de roue dentée (11),
∘ Le capteur de déclenchement permettant d'effectuer, en utilisant un ou plusieurs des axes (X1, Y1, Z1, A1) un mouvement de balayage par rapport au plan objet (OE) du composant de roue dentée (11), et le capteur de déclenchement permettant ensuite de fournir un signal de commutation (s2) lorsque le plan objet (OE) atteint une distance nominale (NA) par rapport au capteur de déclenchement et, au moment où le capteur de déclenchement émet le signal de commutation (s2), de lire et/ou d'enregistrer les informations de coordonnées actuelles du dispositif de mesure à coordonnées (10).

2. Dispositif de mesure à coordonnées (10) selon la revendication 1, **caractérisé en ce que** le capteur de déclenchement est placé de façon oblique par rapport au plan objet (OE) du composant de roue dentée (11), l'angle du faisceau lumineux (LS) par rapport au plan objet (OE) étant compris de préférence dans la plage angulaire allant de ± 5 à ± 70.

3. Dispositif de mesure à coordonnées (10) selon la revendication 1 ou 2, **caractérisé en ce que** le capteur de déclenchement est un capteur dont le fonctionnement repose sur une approche de mesure à 2 segments ou à 4 quarts de cercle.

4. Dispositif de mesure à coordonnées (10) selon la revendication 3, **caractérisé en ce que** le capteur de déclenchement repose sur une approche de mesure par quart de cercle et comprend, côté récepteur, un composant sensible optiquement, de préférence une photodiode (32), avec quatre zones de détection (a, b, c, d) qui sont agencées comme quatre quarts de cercle dans un plan commun, chacune des quatre zones de détection (a, b, c, d) étant raccordée à une entrée de mesure d'un dispositif d'analyse (40) pour fournir le signal de commutation (s2) dès que les quatre zones de détection (a, b, c, d) reçoivent la même intensité lumineuse réfléchie du faisceau lumineux (LS).

5. Dispositif de mesure à coordonnées (10) selon la revendication 1, 2, 3 ou 4, **caractérisé en ce que** le capteur de déclenchement est un capteur dont le fonctionnement repose sur le principe de Foucault et qui comprend, côté émetteur, une optique d'imagerie (21) pour émettre le faisceau lumineux (LS) et côté récepteur plusieurs diodes différentielles (31, 32) pour recevoir le faisceau lumineux (LS) réfléchi sur le plan objet.

6. Dispositif de mesure à coordonnées (10) selon la revendication 1 ou 2, **caractérisé en ce que** le capteur de déclenchement est un capteur à point laser qui comprend un laser, de préférence une diode laser, pour émettre le faisceau lumineux (LS).

7. Dispositif de mesure à coordonnées (10) selon l'une des revendications 1 à 6, **caractérisé en ce que** le dispositif de mesure à coordonnées (10) comprend en outre :
- au moins un capteur de déplacement (19, 19.X1, 19.Y1, 19.Z1) associé à un des axes (X1, Y1, Z1, A1),
- au moins un capteur d'angle (16) qui est associé au logement (13, 14) pouvant être entraîné en rotation.

8. Dispositif de mesure à coordonnées (10) selon la revendication 7, **caractérisé en ce que** le dispositif de mesure à coordonnées (10) comprend en outre :
- une mémoire (18) qui est conçue pour enregistrer les données réelles du au moins un capteur de déplacement (19, 19.X1, 19.Y1, 19.Z1) et du au moins un capteur d'angle (16) sur la position réelle du capteur de commutation (20) par rapport au plan objet (OE) de la roue dentée (11) dès que le capteur de déclenchement fournit le signal de commutation (s2).

9. Dispositif de mesure à coordonnées (10) selon la revendication 7, **caractérisé en ce que** le dispositif de mesure à coordonnées (10) comprend en outre :
- un module de logiciel (SM) qui est conçu pour traiter les données réelles du au moins un capteur de déplacement (19, 19.X1, 19.Y1, 19.Z1) et du au moins un capteur d'angle (16) sur la position réelle du capteur de commutation (20) par rapport au plan objet (OE) de la roue dentée (11) dès que le capteur de déclenchement fournit le signal de commutation (s2).

10. Dispositif de mesure à coordonnées (10) selon la revendication 1, 2 ou 3, **caractérisé en ce que**, par le biais d'un module de logiciel (SM) qui fait de préférence partie d'un système de régulation, on peut déterminer à partir des données réelles du dispositif de mesure à coordonnées au moins une indication géométrique du plan objet (OE) de la roue dentée (11).

11. Dispositif de mesure à coordonnées (10) selon la revendication 1, 2, 3 ou 4, **caractérisé en ce que**, par le biais d'un module de logiciel (SM) qui fait de préférence partie d'un système de régulation, on peut réaliser un processus de mesure automatisé dans le dispositif de mesure à coordonnées (10), au moyen duquel on peut effectuer
- une mesure de division du composant de roue dentée (11), et/ou
- une mesure d'au moins une ligne de flanc du composant de roue dentée (11), et/ou
- une mesure du profil de dent du composant de roue dentée (11).

12. Procédé pour effectuer une mesure optique sans contact sur un composant de roue dentée (11) dans un dispositif de mesure à coordonnées (10) comprenant les étapes suivantes consistant à :
- amener la roue dentée (11) dans le dispositif de mesure à coordonnées (10),
- effectuer un premier mouvement d'avance relatif en utilisant au moins un axe (X1, Y1, Z1, A1) du dispositif de mesure à coordonnées (10) pour amener un capteur de commutation (20) optique travaillant sans contact, conçu comme un capteur de déclenchement, dans une position de départ par rapport à un plan objet (OE) à mesurer du composant de roue dentée (11),
- effectuer une mesure optique du composant de roue dentée (11) en utilisant le capteur de commutation (20) en suivant les étapes partielles suivantes :
∘ faire tourner le composant de roue dentée (11) autour de son axe de rotation (A1),
∘ fournir des signaux de commutation (s2) par le capteur de commutation (20) lorsque le plan objet (OE) atteint la distance nominale (NA) par rapport au capteur de commutation (20),
∘ déterminer les données réelles du dispositif de mesure à coordonnées (10) dès que le capteur de déclenchement fournit le signal de commutation (s2),
∘ déterminer les indications géométriques du composant de roue dentée (11) à partir des données réelles.

13. Procédé selon la revendication 12, **caractérisé en ce que**, en plus de faire tourner le composant de roue dentée (11), le capteur de commutation (20) réalise des mouvements de balayage.

14. Procédé selon la revendication 12 ou 13, **caractérisé en ce que** ce dernier est réalisé pour procéder à
- une mesure de division du composant de roue dentée (11), et/ou
- une mesure d'au moins une ligne de flanc du composant de roue dentée (11), et/ou
- une mesure du profil de dent du composant de roue dentée (11).

15. Procédé selon l'une des revendications 12 à 14, **caractérisé en ce que** le capteur de déclenchement est placé de façon oblique par rapport au plan objet (OE) du composant de roue dentée (11), l'angle du faisceau lumineux (LS) par rapport au plan objet (OE) étant compris de préférence dans la plage angulaire allant de ± 5 à ± 70.
